# EUROPÄISCHE PATENTANMELDUNG

(11) **EP 4 572 060 A1**
(43) Veröffentlichungstag der Anmeldung: **18.06.2025**
(21) Anmeldenummer: 24215941.6
(22) Anmeldetag: 27.11.2024
(51) Int. Cl.: H02J 3/00, H02J 3/14

(54) **VERFAHREN ZUR STEUERUNG EINES STROMVERSORGUNGSNETZES UND STROMVERSORGUNGSSYSTEM**

(30) Priorität: 14.12.2023 EP 23216923
(71) Anmelder: Schweizerische Bundesbahnen SBB, 3000 Bern (CH)
(72) Erfinder: BOSCH, Julius, 4600 Olten (CH)
(74) Vertreter: Rutz & Partner

(57) **Zusammenfassung**

Das Verfahren dient der Steuerung eines Stromversorgungssystems (SVS),
das ein Stromversorgungsnetz (VN) umfasst, das wenigstens eine erste Netzebene (N1) mit einer höheren Spannung und wenigstens eine zweite Netzebene (N2) mit einer tieferen Spannung aufweist, das Netzelemente (G1, G2, X1, X2, L) umfasst, die durch Schaltelemente (S1, S2, S3, Y1, Y2) an die erste und/oder die zweite Netzebene (N1, N2) oder an weitere Netzebenen anschaltbar sind,
das eine zentrale Steuereinheit (1) umfasst, durch die die Schaltelemente (S1, S2, S3, Y1, Y2) steuerbar sind, und
das in mehrere Netzeinheiten (NEx, NEy) auftrennbar ist, die je ein Netzsegment (VNsx, VNsy) aufweisen, denen je ein dezentrales Steuersegment (CSx, CSy) zugeordnet wird, das eine dezentrale Steuereinheit (20) und wenigstens ein Steuermodul (2A, 2B) aufweist, und mittels dessen wenigstens ein Netzelement (G1, G2, X1, X2, L) im zugehörigen Netzsegment (VNsx, VNsy) steuerbar und/oder zuschaltbar oder abschaltbar ist, wobei
wenigstens ein Systemereignis definiert und hinsichtlich des Auftretens überwacht wird, nach dessen Detektion die dezentrale Steuereinheit (20) des dezentralen Steuersegments (CSx, CSy) automatisch die Steuerung des zugeordneten Netzsegments (VNsx, VNsy) ganz oder teilweise übernimmt und bei Auftreten eines Netzausfalls die Netzelemente (G1, G2, X1, X2, L) steuert, um die Spannungen auf den Netzebenen (N1, N2) wieder zu erstellen und die Netzeinheiten (NEx, NEy) wieder miteinander zu verbinden.

Erfindungsgemäss ist vorgesehen, dass von den dezentralen Steuereinheiten (20) netzunabhängige oder/oder netzabhängige Elementeigenschaften und Prioritäten für die Netzelemente (G1, G2, X1, X2, L) erfasst und gespeichert werden, und dass die Netzelemente (G1, G2, X1, X2) von den dezentralen Steuereinheiten (20) in Abhängigkeit der ermittelten Elementeigenschaften und Prioritäten nach Auftreten des Netzausfalls vom Netzsegment (VNsx, VNsy) gestaffelt abgeschaltet und/oder während des Prozesses des Netzwiederaufbau dem Netzsegment (VNsx, VNsy) gestaffelt zugeschaltet werden.

## Beschreibung

Die Erfindung betrifft ein Verfahren zur Steuerung eines Stromversorgungsnetzes und ein nach diesem Verfahren arbeitendes Stromversorgungssystem.

Moderne Stromversorgungsnetze weisen eine hohe Verfügbarkeit und eine hohe Stabilität hinsichtlich Spannung und Frequenz auf. Stromausfälle treten selten auf, haben im Ereignisfall oft aber schwerwiegende finanzielle und gesellschaftliche Auswirkungen. Besonders kritisch sind Stromausfälle in Stromversorgungsnetzen, die von Eisenbahnsystemen genutzt werden. Damit der Bahnverkehr nicht zum Erliegen kommt und Fahrpläne ohne grössere Eingriffe und Verzögerungen aufrechterhalten werden können, soll der vollständige Netzausfall (Blackout) oder der teilweise Netzausfall (Brownout) möglichst kurz sein. Einem Stromausfall soll der Netzwiederaufbau rasch erfolgen.

Routinen zur Gewährleistung der Netzsicherheit sind bereits weit ausgebaut. Störfälle, beispielsweise verursacht durch Blitzschläge, können in der Regel behandelt werden, ohne dass mit längeren Stromausfällen zu rechnen ist. Kritisch ist hingegen das gleichzeitige Auftreten mehrerer Störfälle. In [1], Interim Report into the Low Frequency Demand Disconnection (LFDD) following Generator Trips and Frequency Excursion on 9 Aug 2019, der nationalgridESO, England vom 19.08.2019 ist ein Störfall beschrieben, bei dem nach einem Blitzschlag zwei Stromerzeuger gleichzeitig vom Netz gingen und die Netzfrequenz den zulässigen Bereich von 49.5 Hz - 50.5 Hz unterschritt und bei 48.8 Hz alle verfügbare «backup power» zugeschaltet wurde. Das Überwachungssystem schaltete automatisch Kunden im Verteilnetz kontrolliert und in Übereinstimmung mit den von den Netzbetreibern vorgegebenen Parametern ab. In diesem Fall wurden rund 5% des Strombedarfs in Grossbritannien abgeschaltet, um die anderen 95% zu schützen. Von den Abschaltungen betroffen war insbesondere auch das Stromversorgungsnetz der Eisenbahnen.

In [2], A. Pandey, SUGAR-R: Robust Online Restoration Platform for SCADA-Absent Grid, Electrical and Computer Engineering Department, Carnegie Mellon University, Pittsburgh, 2019, ist beschrieben, dass die Wiederherstellung von Stromversorgungsnetzen während eines Stromausfalls üblicherweise mit Hilfe des zentralen Kontrollsystems SCADA (Supervisory Control and Data Acquisition System) erfolgt. Weiter ist ausgeführt, dass SCADA und das zentrale Energiemanagementsystem EMS (Energy Management System) selbst störungsanfällig sind und beispielsweise aufgrund von Cyber-Attacken ausfallen, oder schlimmer noch, kompromittiert werden können.

Gemäss [2], erfordert die Wiederherstellung ohne SCADA und EMS erfahrene Ingenieure, welche die Wiederaufbauprozesse manuell steuern. Ein manueller Betrieb kann jedoch zu einem suboptimalen Wiederherstellungsprozess oder zu Schäden an der Ausrüstung führen. Ausserdem kann dies zu einer verzögerten Wiedereinschaltung von Stromversorgungssystemen für kritische Ressourcen, wie Krankenhäuser, Militäreinrichtungen und Verkehrssysteme führen. Aufgrund dieser Nachteile sind sowohl Regulierungsbehörden als auch Netzbetreiber an Methoden interessiert, die bei der Wiederherstellung von Netzen bei einem Schwarzstart ohne SCADA helfen können.

In [2] wird dazu die Erstellung eines Simulation Framework vorgeschlagen. Dabei wird eine Online-Netztopologie des lokalen Netzes erstellt und aufrechterhalten, indem kontinuierlich verschiedene Klassen lokaler Messungen durchgeführt und Sensordaten erfasst und auf Systemmodelle abgebildet werden. Diese Messungen werden nicht über das zentrale SCADA-System, sondern von dezentralen Messvorrichtungen über sekundäre Kanäle bereitgestellt, wodurch ungültige Systemmodelle vermieden werden, die durch Cyberangriffe auf das zentrale SCADA oder EMS durch falsche Dateninjektion verursacht werden könnten. Der Netzwiederaufbau erfolgt daher gestützt auf die simulierte Netztopologie, die das Datengerüst des SCADA vollständig ersetzt.

Nachteilig bei dieser Lösung ist, dass das Simulation Framework selbst Gegenstand eines Cyberangriffs werden kann. Weiterhin ist der Aufwand zur Erstellung und Aufrechterhaltung des Simulation Frameworks erheblich. Zudem ist ein automatisierter Netzwiederaufbau nicht möglich, da das Simulation Framework das SCADA nicht vollständig ersetzt und Möglichkeiten zum automatisierten Zugriff auf das Stromversorgungsnetz und dessen Elemente weitgehend fehlen. Das Simulation Framework erleichtert den technischen Experten den Netzwiederaufbau, stellt aber noch nicht die gewünschten Automatismen für den Netzwiederaufbau zur Verfügung.

[3], J. Bosch et al., Ultrafast restoration after nationwide blackout: concept, principles & example of application, 2020 INTERNATIONAL CONFERENCE ON SMART ENERGY SYSTEMS AND TECHNOLOGIES (SEST), IEEE, 07.09.2020, offenbart Methoden zum raschen Wiederaufbau eines Stromversorgungsnetzes nach einem Stromausfall in zwei Stufen. Die erste Stufe des Netzwiederaufbaus basiert auf zentralisierten Automatisierungs- und Kommunikationssystemen. In einer zweiten Stufe erfolgt der Netzwiederaufbau unabhängig von zentralen Systemen und Telekommunikationsnetzen. Die Wiederherstellungszellen werden durch dezentral gesteuerte Schalter von Kraftwerken oder Frequenzumrichtern mit Strom versorgt. Auf diese Weise werden Netzinseln um die Kraftwerke und Umrichterstationen herum gebildet, die wachsen und miteinander synchronisiert werden, sobald sie aneinander angrenzen. Die Regelung wird an dezentrale automatisierte Regler delegiert, die sich selbst aktivieren, wenn keine gültige Verbindung zum zentralen Steuerungssystem besteht. Der Hauptvorteil einer dezentralen Netzwiederherstellung besteht darin, dass sie mit mehr Blackout-Ursachen zurechtkommt (siehe Tabelle II), da einzelne Ausfallpunkte des zentralen Systems beseitigt werden.

[4], US2008/074373A1, offenbart ein Leistungssteuerungssystem mit einer Vielzahl von Spannungsreglern, die je dazu ausgelegt sind, geregelte Leistung an eine Last zu übertragen; mit einer seriellen Datenkommunikationsleitung, die die Vielzahl von Spannungsreglern operativ miteinander verbindet; und mit einem digitalen Leistungsmanager, der mit der seriellen Datenkommunikationsleitung verbunden ist, wobei der digitale Leistungsmanager eine Steuereinheit umfasst, die gespeicherte Anweisungen auszuführt, um Betriebsparameter der Vielzahl von Spannungsreglern über die serielle Datenkommunikationsleitung zu programmieren und Überwachungsdaten von der Vielzahl von Spannungsreglern über die serielle Datenkommunikationsleitung zu empfangen.

Der vorliegenden Erfindung liegt daher die Aufgabe zugrunde, ein verbessertes Verfahren zur Steuerung eines Stromversorgungsnetzes und ein nach diesem Verfahren arbeitendes verbessertes Stromversorgungssystem anzugeben.

Das erfindungsgemässe Verfahren soll es erlauben, rasch, flexibel und wirksam auf Systemereignisse, die vom Normalbetrieb des Stromversorgungssystems abweichen und die beispielsweise zu aussergewöhnlichen Systembelastungen oder zu einem vollständigen oder teilweisen Netzausfall führen können oder geführt haben, automatisch zu reagieren.

Überlastungen der zentralen Steuereinheit oder Cyberangriffen auf die zentrale Steuereinheit soll wirksam begegnet werden.

Die erfindungsgemässen Massnahmen sollen es erlauben, die Robustheit und Zuverlässigkeit des Stromversorgungsnetzes zu verbessern.

In Störungssituationen, beispielsweise beim Ausfall eines oder mehrerer Stromerzeuger soll einem «Brownout» wirksam begegnet werden. Beim Auftreten eines teilweisen oder vollständigen »Blackout« soll der Netzwiederaufbau automatisch und innerhalb kurzer Zeit erfolgen können.

Das erfindungsgemässe Verfahren soll das Personal im Falle einer Störung wesentlich entlasten.

Das Verfahren soll es erlauben, die Anforderungen der Nutzer des Stromversorgungsnetzes optimal zu befriedigen.

Das erfindungsgemässe Verfahren soll mit einfachen Massnahmen und Mitteln realisiert werden können, so dass das verbesserte Stromversorgungssystem mit relativ geringen Aufwendungen realisiert werden kann.

Netzelemente des Stromversorgungsnetzes sollen bedarfsweise steuerbar oder an das Stromversorgungsnetz zuschaltbar oder davon trennbar sein, sodass alle Steuerungsaufgaben nach oder während Störungsfällen den Umständen entsprechend optimal erfüllt werden können.

Die Lösung dieser Aufgabe gelingt einem Verfahren nach Anspruch 1 und einem Stromversorgungssystem nach Anspruch 16. Vorteilhafte Ausgestaltungen der Erfindung sind in weiteren Ansprüchen definiert.

Das Verfahren dient der Steuerung eines Stromversorgungssystems,
- das ein Stromversorgungsnetz umfasst, das wenigstens eine erste Netzebene mit einer höheren Spannung und wenigstens eine zweite Netzebene mit einer tieferen Spannung aufweist, das Netzelemente umfasst, die durch Schaltelemente an die erste oder die zweite Netzebene oder einerseits an die erste Netzebene und andererseits an die zweite Netzebene oder an weitere Netzebenen anschaltbar sind,
- das eine zentrale Steuereinheit umfasst, durch die die Schaltelemente steuerbar sind, und
- das in mehrere Netzeinheiten auftrennbar ist, die je ein Netzsegment aufweisen, denen je ein dezentrales Steuersegment zugeordnet wird, das eine dezentrale Steuereinheit und wenigstens ein Steuermodul aufweist, und mittels dessen wenigstens ein Netzelement im zugehörigen Netzsegment steuerbar und/oder zuschaltbar oder abschaltbar ist, wobei
- wenigstens ein Systemereignis definiert und hinsichtlich des Auftretens überwacht wird, nach dessen Detektion die dezentrale Steuereinheit des dezentralen Steuersegments automatisch die Steuerung des zugeordneten Netzsegments ganz oder teilweise übernimmt und bei Auftreten eines Netzausfalls die Netzelemente steuert, um die Spannungen auf den Netzebenen wieder zu erstellen und die Netzeinheiten wieder miteinander zu verbinden.

Erfindungsgemäss ist vorgesehen, dass von den dezentralen Steuereinheiten netzunabhängige und/oder netzabhängige Elementeigenschaften und netzabhängige Elementeigenschaften und Prioritäten für die Netzelemente erfasst und gespeichert werden, und dass die Netzelemente von den dezentralen Steuereinheiten in Abhängigkeit der ermittelten Elementeigenschaften und Prioritäten nach Auftreten des Netzausfalls vom Netzsegment gestaffelt abgeschaltet und/oder während des Prozesses des Netzwiederaufbau dem Netzsegment gestaffelt zugeschaltet werden.

Das erfindungsgemässe Stromversorgungssystem umfasst die zentrale Steuereinheit und wenigstens zwei Netzsegmente, die gemäss dem erfindungsgemässen Verfahren arbeiten.

Die dezentralen Steuereinheiten sind in der Lage, die dezentralen Netzeinheiten nach Auftreten eines Systemereignisses von benachbarten Netzeinheiten zu trennen und wieder aufzubauen und die Netzelemente gestaffelt zuzuschalten. Nach dem Aufbau der Spannung auf der ersten Netzebene kann auch die Spannung auf der zweiten Netzebene erfolgreich wieder aufgebaut werden. Lasten mit hoher Priorität können bereits in einer frühen Phase an das Stromversorgungsnetz angeschlossen werden.

Von der zentralen Steuereinheit und von den dezentralen Steuereinheiten werden netzunabhängige und/oder netzabhängige Elementeigenschaften für die Netzelemente erfasst und von den dezentralen Steuereinheiten gespeichert. Die Netzelemente werden von den dezentralen Steuereinheiten in der Folge in Abhängigkeit der ermittelten Elementeigenschaften und Prioritäten gestaffelt abgeschaltet oder gestaffelt dem Netzsegment zugeschaltet.

Die Elementeigenschaften und/oder die Prioritäten der Netzelemente eines Netzsegments werden vorzugsweise periodisch zur Steuereinheit dieses Netzsegments übertragen, dort gespeichert und für die dezentrale Steuerung des Netzelements insbesondere nach Auftreten eines Systemereignisses verwendet. Ermittelte Systemdaten, die beispielsweise als Framework oder Modell zur Verfügung stehen, sollen automatisch abgearbeitet werden können, um Aufgaben entsprechend ihrer Priorität zu lösen und beispielsweise den sicheren Netzwiederaufbau zu beschleunigen.

Vorzugsweise ist vorgesehen, dass die Elementeigenschaften und/oder die Prioritäten der Netzelemente des Stromversorgungsnetzes in der zentralen Steuereinheit in einem Modell abgebildet werden und dass die Elementeigenschaften und/oder die Prioritäten der Netzelemente der Netzeinheiten den Steuereinheiten dieser Netzeinheiten mit dem vollständigen Modell oder in einem Teilmodell zur betreffenden Netzeinheit übertragen und dort gespeichert werden. Die Staffelung der Netzelemente für die Zuschaltung und/oder Abschaltung nach einem Systemereignis kann nun vorzugsweise automatisch unter Berücksichtigung der Prioritäten und/oder Daten des dezentral verwendeten Modells anhand dafür vorgesehener Regeln erfolgen.

Elementeigenschaften können auch historische Daten oder Informationen zu den Netzelementen umfassen, beispielsweise Betriebszustände der Netzelemente vor Auftreten eines Netzausfalls. Im verwendeten Modell werden vorzugsweise auch diese historischen Daten der Netzelemente abgelegt, die für die Steuerung dieser Netzelemente von Bedeutung sein können. Sofern ein Netzelement vor einem Netzausfall nicht zugeschaltet war, wird dies im Modell vorzugsweise erfasst und beim Hochfahren der Netzeinheiten berücksichtigt.

Die Regeln zur Festlegung der Staffelung legen Rangordnungen der netzabhängigen und netzunabhängigen Elementeigenschaften unter Berücksichtigung der Prioritäten fest. Die Regeln können auch Kombinationen von Elementeigenschaften einer Rangordnung zuordnen. Besonders vorteilhaft ist, dass die Staffelung jeweils in einfacher Weise automatisch erfolgen kann und aufgrund des aktuellen Stands des verwendeten Modells stets optimal ist.

Weiter ist vorzugsweise vorgesehen, dass das übertragene Modell oder Teilmodell in den Netzeinheiten nach Erhalt verifiziert und laufend aktualisiert wird, und dass bei einer Abweichung des neu erhaltenen Modells oder Teilmodells vom bisher bearbeiteten Modell oder Teilmodell ein Systemereignis festgestellt und die Abweichung vorzugsweise identifiziert und bei der Staffelung der Netzelemente berücksichtigt wird.

Dieses Vorgehen hat verschiedene Vorteile. Einerseits erhalten die dezentralen Steuereinheiten mit dem Modell oder Teilmodell alle Informationen, die für den gestaffelten Aufbau oder Abbau des Netzes in den dezentralen Netzeinheiten erforderlich sind.

Sofern Regeln zur Festlegung der Staffelung vorgesehen sind, wird der Plan zur Staffelung der Netzelemente vorzugsweise automatisch unter Berücksichtigung des vorliegenden Modells gebildet. Sofern in den Regeln beispielsweise festgelegt ist, dass Transformatoren, die mit hoher Impedanz mit dem Stromversorgungsnetz verbunden sind, früher zugeschaltet werden als Transformatoren, die mit tiefer Impedanz mit dem Stromversorgungsnetz verbunden sind, können die entsprechenden Netzelemente im Modell ausgelesen und beispielsweise in einer Liste gestaffelt werden. Beispielsweise können Transformatoren, denen eine niedrige Priorität zugeordnet ist, unabhängig von ihrer Transformatorimpedanz oder Netzimpedanz vorerst ausgelassen werden.

Weiterhin kann die Integrität des zentral verwalteten Modells stets verifiziert werden. Abweichungen können identifiziert und korrigiert werden. Sofern die Abweichung als Systemereignis identifiziert wird, kann die dezentrale Steuereinheit die Steuerung der betreffenden Netzeinheit übernehmen.

Die gestaffelte Zuschaltung der Netzelemente erfolgt vorzugsweise nach einem globalen oder netzweiten Zeitplan, der jedem Netzwerkelement oder Gruppen von Netzwerkelementen einen individuellen Einschaltzeitpunkt zuordnet. Dadurch wird sichergestellt, dass dem Stromversorgungsnetz nicht zufällig eine hohe Anzahl von Transformatoren zugeschaltet werden, die hohe Einschaltströme verursachen und das Hochfahren des Stromversorgungsnetzes verhindern können.

Vorzugsweise wird ein Referenzzeitpunkt definiert oder ein Startzeitpunkt kommuniziert, ab dem die Netzelemente gestaffelt zugeschaltet werden. Beispielsweise werden sich periodisch wiederholende Intervalle von beispielsweise 10 Minuten festgelegt, innerhalb denen den Netzeinheiten individuell bestimmte Zuschaltzeitpunkte zugeordnet werden. D.h., für die Zuschaltung bereitstehende Transformatoren X1, X2 werden beim Hochfahren des Stromversorgungsnetzes nicht zu beliebigen Zeitpunkten, sondern zu den zugeordneten Zeitpunkten innerhalb des Intervalls zugeschaltet, dass nach Bereitstellung oder Freigabe der Transformatoren X1, X2 zur Zuschaltung auftritt. Der Transformator X1, dem beispielsweise der Zeitpunkt 1 Minute nach Intervallbeginn oder 1/10 der Periodendauer zugeordnet ist, wird beispielsweise bei Minute 8 oder 8/10 der Periodendauer durch ein erstes Steuermodul zur Zuschaltung freigegeben. Ein nachgeschaltetes zweites Steuermodul verzögert die Zuschaltung des Transformators X1 bis zum Zeitpunkt 1 Minute nach Intervallbeginn oder 1/10 der Periodendauer des nächsten Intervalls, d.h. bis zum Startzeitpunkt, der dem Transformator X1 innerhalb der vorzugsweise periodisch ablaufenden Intervalle zugeordnet ist.

Vorzugsweise wird ein Raster festgelegt, dass sich der periodisch wiederholt und beispielsweise eine Periodendauer im Bereich von 3 - 10 Minuten aufweist. Wird ein Transformator zu einem bestimmten Zeitpunkt innerhalb einer ersten Periode nicht zugeschaltet, so wird er vorzugsweise zum selben Zeitpunkt innerhalb der nächsten Periode zugeschaltet.

Alternativ erfolgt der Vorgang der Zuschaltung von Netzelementen, insbesondere Transformatoren, verzögert mit einer festgelegten festen oder variablen Verzögerungszeit. Diese Massnahme verhindert innerhalb einer Netzeinheit bereits das Auftreten hoher Einschaltströme durch gleichzeitiges Zuschalten mehrerer Transformatoren.

Netzabhängige Elementeigenschaften sind beispielsweise der Betriebsstatus, die Wichtigkeit, und die Anordnung der Netzelemente innerhalb der Netztopologie oder die Historie des Betriebs der Netzelemente, beispielsweise die Schaltzustände der Netzelemente vor dem Auftreten eines Systemereignisses.

Netzunabhängige Elementeigenschaften sind beispielsweise die technischen Spezifikationen des jeweiligen Netzelements. Eigenschaften der Netzelemente, die sich nach der Zuschaltung an das Stromversorgungsnetz ergeben und abhängig vom Einsatz des Netzelements innerhalb des Stromversorgungsnetzes sind, sind netzabhängige Eigenschaften. Die für die Einschaltströme relevanten Impedanzen sind wesentlich von der Länge der Anschlussleitungen oder Verbindungsleitungen abhängig, über die ein Netzelemente, beispielsweise ein Transformator, an das Stromversorgungsnetz angeschlossen ist. Nachstehend wird daher unterschieden zwischen der Impedanz eines Netzelements, beispielsweise der Transformatorimpedanz, und der Netzimpedanz eines Netzelements, beispielsweise eines Transformators nach Anschluss an das Stromversorgungsnetz. Die Transformatorimpedanz ist definiert als das Verhältnis des Spannungsabfalls am Transformator unter Volllastbedingungen zum Nennstrom und ergibt sich aus dem Widerstand der Kupferwicklungen und der Reaktanz des vom Transformator erzeugten Magnetfelds. Die Netzimpedanz eines Transformators ist hingegen abhängig von der der Transformatorimpedanz und der Impedanz der Anschlussleitungen oder Verbindungsleitungen. Für die Einschaltströme sind die Netzimpedanzen der Transformatoren von primärer Bedeutung.

Vorzugsweise werden Transformatoren mit höheren Netzimpedanzen und/oder höheren Transformatorimpedanzen zuerst zugeschaltet. Prioritär wird normalerweise die Netzimpedanz berücksichtigt, welche die Höhe der Einschaltströme bestimmt. Beispielsweise werden Transformatoren mit hohen Wicklungszahlen, die typischerweise eine hohe Transformatorimpedanz aufweisen, zuerst zugeschaltet. Transformatoren mit geringen Transformatorimpedanzen werden vorzugsweise verzögert zugeschaltet. Bevorzugt werden jedoch Transformatoren, die beispielsweise über eine lange Stichleitung versorgt werden und daher eine höhere Netzimpedanz aufweisen, prioritär zugeschaltet. Eine prioritäre Zuschaltung von Transformatoren mit hoher Netzimpedanz ist vorteilhaft, da durch die Netzimpedanz der Einschaltstromstoss (inrush current) des Transformators gedämpft wird.

Transformatoren, die beispielsweise topologisch zentral im Stromversorgungsnetz angeschlossen sind und daher eine geringe Netzimpedanz aufweisen, werden daher vorzugsweise verzögert zugeschaltet.

Vorzugsweise werden von der zentralen Steuereinheit und/oder den dezentralen Steuereinheiten Prioritäten für die Netzelemente festgelegt und von den dezentralen Steuereinheiten gespeichert. In der Folge werden die Netzelemente von den dezentralen Steuereinheiten gestaffelt in Abhängigkeit der festgelegten Prioritäten vom Netzsegment abgeschaltet oder dem Netzsegment zugeschaltet. Sofern ein Transformator mit tiefer Transformatorimpedanz oder Netzimpedanz eine hohe Priorität hat, kann dessen Zuschaltung auch vorgezogen werden.

Die gestaffelte Zuschaltung der Netzelemente kann auch unter Berücksichtigung einer Kombination von netzabhängigen und netzunabhängigen Elementeigenschaften erfolgen. Netzabhängigen Elementeigenschaften kommt normalerweise eine grössere Bedeutung zu als netzunabhängigen Elementeigenschaften. Hingegen kann die Zuschaltung eines Netzelements, das beispielsweise aufgrund einer tiefen Impedanz eine spätere Rangfolge aufweisen würde, zu einem früheren Zeitpunkt erfolgen und durch den Verzicht auf die Zuschaltung anderer Netzelemente kompensiert werden. Die Staffelung der Zuschaltung muss daher nicht unbedingt starr nach einer einzigen Regel festgelegt werden.

Bevorzugt werden die Schaltzeitpunkte in Abhängigkeit der festgestellten Elementeigenschaften und der festgelegten Prioritäten bestimmt. Bei Transformatoren mit identischen Spezifikationen wird daher derjenige zuerst zugeschaltet, der die höhere Priorität aufweist. Ebenso kann ein Transformator, der beispielsweise für den Betrieb eines Spitals oder einer wichtigen Eisenbahnlinie zuerst zugeschaltet werden, obwohl er eine tiefere Transformatorimpedanz oder Netzimpedanz als ein später zugeschalteter Transformator aufweist, der jedoch eine geringere Priorität aufweist.

Der Vorgang der Zuschaltung von Netzelementen, insbesondere Transformatoren, welche die erste und die zweite Netzebene miteinander verbinden, erfolgt vorzugsweise verzögert in Abhängigkeit des Zustands des Stromversorgungsnetzes oder davon abhängiger Parameter, wie der Netzspannung und/oder der Netzfrequenz. Sofern die Netzfrequenz beispielsweise im unteren Teil des Sollbereichs liegt, erfolgt die Zuschaltung vorzugsweise verzögert. Falls die Spannung und/oder die Frequenz die vorgesehenen Sollbereiche erreichen, erfolgt die Zuschaltung der Transformatoren gegebenenfalls auch erst nach einer vorbestimmten Verzögerungszeit.

Von Bedeutung für die gestaffelte und verzögerte Zuschaltung von Netzelementen ist ferner die verfügbare Einspeiseleistung.

Vorzugsweise erfolgt die gestaffelte und verzögerte Zuschaltung von Netzelementen unter Berücksichtigung der Höhe harmonischer Verzerrungen, die im Stromversorgungsnetz auftreten. Das Auftreten harmonische Verzerrungen kann das Hochfahren des Stromversorgungsnetzes oder angeschlossene Verbraucher stören und gegebenenfalls beschädigen. Zur Vermeidung dieser Probleme wird erfindungsgemäss vorgesehen, dass harmonische Verzerrungen im Stromversorgungsnetz begrenzt werden und ein entsprechender Grenzwert nicht überschritten wird.

Vorzugsweise wird der Anteil harmonischer Verzerrungen im Stromversorgungsnetz gemessen und mit einem Grenzwert verglichen und nach Überschreiten des Grenzwerts die Zuschaltung von Netzelementen, insbesondere von Transformatoren, verzögert, bis die harmonischen Verzerrungen wieder unterhalb des Grenzwerts liegen. Die Zuschaltung der Netzelemente kann hingegen auch beschleunigt werden, wenn die harmonischen Verzerrungen unterhalb eines zweiten Grenzwerts liegen, sodass ein rasches Hochfahren des Stromversorgungsnetzes möglich ist, wenn die harmonische Verzerrungen tief liegen. Verzögerungszeiten werden daher bevorzugt unter Berücksichtigung der gemessenen harmonischen Verzerrungen berechnet.

Bevorzugt ist vorgesehen, dass der Anteil harmonischer Verzerrungen bei der Zuschaltung von Netzelementen, insbesondere von Transformatoren, durch Simulation zentral oder dezentral vorzugsweise anhand des Modells oder des zugehörigen Teilmodells ermittelt wird und Verzögerungszeiten für die Zuschaltung der Netzelemente derart festgelegt werden, dass ein vorgesehener Grenzwert bei der Simulation nicht überschritten wird.

Auch bei Verwendung der durch Simulation ermittelten Verzögerungswerte werden harmonische Verzerrungen im Stromversorgungsnetz vorzugsweise trotzdem gemessen und überwacht.

In weiteren vorzugsweisen Ausgestaltungen der Erfindung wird vorgesehen, dass die Zuschaltung von Transformatoren derart erfolgt, dass die erste Transformatorwicklung an die erste Netzebene und die zweite Transformatorwicklung erst mit einer festen oder variablen Verzögerung an die zweite Netzebene zugeschaltet wird. Durch diese Massnahme werden die Einschaltströme begrenzt. Der Transformatorkern wird magnetisiert, bevor die zweite Transformatorwicklung an die zweite Netzebene angeschlossen wird.

Die Zuschaltung oder Abschaltung von Transformatoren erfolgt vorzugsweise zu Zeitpunkten, die hinsichtlich des Auftretens von Einschaltströmen und Überspannungen optimiert sind. Die Zuschaltung der Transformatoren erfolgt vorzugsweise im Bereich eines Spannungsmaximums und die Abschaltung der Transformatoren erfolgt vorzugsweise im Bereich eines Stromminimums. Die Schaltpunkte werden vorzugsweise individuell für jeden Transformator unter Berücksichtigung der Remanenzflüsse berechnet.

Netzsegmente können auch Stromquellen, wie Generatoren, Umrichter und Umformer, aufweisen. Sofern ein Netzsegment Netzelemente in der Ausgestaltung von Generatoren aufweist, so werden diese nach Ermittlung eines Systemereignisses von der dezentralen Steuereinheit vom Netzsegment abgeschaltet und vorzugsweise in einen Zustand der Betriebsbereitschaft überführt, falls zumindest ein Teil der Netzzustandsdaten ausserhalb eines festgelegten Sollbereichs liegt. Beispielsweise werden Wasserturbinen weiterbetrieben, sodass der Generator eine Spannung der Amplitude und Frequenz abgibt, die innerhalb des Sollbereichs liegt, der für die Zuschaltung der Generatoren gefordert ist. Durch diese Massnahmen kann ein Netzwiederaufbau innerhalb sehr kurzer Zeit, gegebenenfalls innerhalb von wenigen Minuten erfolgen.

Nach Ermittlung eines Systemereignisses mit Abschaltung von Stromquellen, zum Beispiel Generatoren, Umrichter und Umformer, werden diese von der dezentralen Steuereinheit wieder der ersten Netzebene des zugehörigen Netzsegments zugeschaltet, falls zumindest ein Teil der Netzzustandsdaten innerhalb eines festgelegten Sollbereichs liegt. Typischerweise werden Generatoren zugeschaltet, falls die Amplitude, Frequenz und Phasenlage der erzeugten Spannung weitgehend deckungsgleich mit der Amplitude, Frequenz und Phasenlage der Spannung der ersten Netzebene sind, an die die Generatoren zugeschaltet werden. Erfindungsgemäss wird dieser Synchronisationsvorgang entsprechend gesteuert.

In vorzugsweisen Ausgestaltungen verfügt die dezentrale Steuereinheit über einen Kommunikationskanal zu lokalen Laststeuereinheiten, beispielsweise zu Steuereinheiten in Lokomotiven, durch die Lasten an die zweite Netzebene oder weitere Netzebenen anschaltbar sind. Nach dem Auftreten eines Systemereignisses können die Lasten von der dezentralen Steuereinheit in Abhängigkeit von Netzzustandsdaten und/oder festgelegten Prioritäten vom zugehörigen Netzsegment abschaltet oder diesem zugeschaltet werden.

Für den geordneten Netzwiederaufbau ist es von zentraler Bedeutung, dass Netzelemente gesichert vom Stromversorgungsnetz abgeschaltet werden können, damit der Netzwiederaufbau schnell und sicher wieder erfolgen kann. Dabei können Netzelemente, deren Status unklar ist und die möglicherweise der Stromversorgungsnetz noch zugeschaltet sind, den kontrollierten und sicheren Netzwiederaufbau verhindern. Damit der rasche Netzwiederaufbau gelingt, werden Netzelemente, insbesondere Transformatoren, mit unklarem Schaltzustand vorzugsweise durch alternative Schaltmittel automatisch vom Netz genommen. Nebst den primären Schaltmitteln sind daher die erforderlichen alternativen Schaltmittel im Stromversorgungsnetz vorzusehen. Zudem sind in den dezentralen Steuereinheiten Schaltroutinen vorzusehen, die es erlauben, die primären Schaltelemente und alternativ die alternativen Schaltmittel zu betätigen.

Die dezentralen Steuereinheiten können daher alle wesentlichen Netzelemente, wie Stromquellen, Generatoren, Umrichter, Umformer, Akkumulatoren Transformatoren oder Lasten bedarfsweise schalten, um einen möglichst optimalen Betrieb des Stromversorgungsnetzes und im Falle eines Netzausfalls einen raschen und automatisierten Netzwiederaufbau zu gewährleisten.

Die Netzelemente, die erfindungsgemäss gesteuert und/oder geregelt und/oder geschaltet werden, sind mit wenigstens einer von mehreren Netzebenen, deren Anzahl vom Netzbetreiber bestimmt wird, fest verbunden oder durch Schaltelemente verbindbar.

Mittels der dezentralen Steuereinheit und/oder den dezentralen Steuersegmenten sind grundsätzlich alle in einem Stromversorgungsnetz möglicherweise vorhandenen Netzsegmente, wie Stromquellen, Generatoren, Umrichter, Umformer, Akkumulatoren Transformatoren oder Lasten oder Kondensatoren steuerbar oder dem Stromversorgungsnetz zuschaltbar oder von diesem trennbar. Insbesondere sind Netzelemente steuerbar oder abschaltbar, die für den geordneten Netzwiederaufbau von Bedeutung sind.

Vorzugsweise sind die Netzelemente nicht nur an das Stromversorgungsnetz abschaltbar oder von diesem trennbar, sondern auch in ihrem Verhalten und/oder in ihren Eigenschaften steuerbar. Beispielsweise kann ein Transformator an das Stromversorgungsnetz angeschaltet oder von diesen getrennt werden. Zusätzlich können auch einzelne Transformatorwicklungen bedarfsweise geschaltet werden. Ebenso können Stromversorgungsvorrichtungen geschaltet und gesteuert werden. Beispielsweise kann eine Generatoreinheit, die beispielsweise eine mit dem Generator gekoppelte Turbine umfasst, derart geregelt werden, dass deren Drehzahl zur Frequenz des Stromversorgungsnetzes korrespondiert, bevor die Generatorschalter betätigt werden.

Die Erfindung betrifft somit ein dynamisches hybrides Steuersystem für einen Stromversorgungsnetz, welches zentrale und dezentrale Steuerungsressourcen situativ nutzt und dezentral automatisch und effizient in das Stromversorgungsnetz eingreift, wenn ein definiertes Systemereignis eingetreten ist.

Systemereignisse treten typischerweise auf, wenn die zentrale Steuereinheit, beispielsweise ein zentrales Kontrollsystems SCADA (Supervisory Control and Data Acquisition System) nicht mehr operativ ist, nicht mehr erreichbar ist, eine Fehlfunktion aufweist, möglicherweise unter Überlastung und/oder einem Cyberangriff leidet.

Solchen Fällen sollen Aufgaben der zentralen Steuereinheit flexibel von den dezentralen Steuersegmenten übernommen werden, um den weiteren Betrieb des Stromversorgungsnetzes zu gewährleisten oder korrigierend einzugreifen, beispielsweise um einen teilweisen und gegebenenfalls fortschreitenden oder vollständigen Stromausfall zu verhindern oder um nach einem teilweisen oder vollständigen Stromausfall einen raschen und kontrollierten Netzwiederaufbau zu vollziehen.

Durch die zentrale und dezentrale Anordnung der Steuerungsintelligenz ist es möglich, Störungen, die zu einem teilweisen oder vollständigen Stromausfall führen könnten, bereits dezentral zu erfassen und dezentral notwendige Massnahmen einzuleiten. Erfindungsgemässe Stromversorgungssystem sind daher robust und resilient gegen Störungseinwirkungen.

Weiterhin gelingt nach dem Auftreten eines teilweisen oder vollständigen Stromausfalls ein rascher Netzwiederaufbau, in dem alle dezentralen Steuersegmente den Netzwiederaufbau automatisch aktiv unterstützen.

Die zentrale Steuereinheit, gegebenenfalls das SCADA, wird entlastet und kann nach Möglichkeit noch Aufgaben erfüllen oder im Falle eines Cyberangriffs geprüft und wieder hochgefahren werden.

Möglich ist auch die gegenseitige Überprüfung von Steuerungsvorgängen, die entweder zentral oder dezentral ausgeführt werden, um allfällige Fehlfunktionen zu identifizieren.

Systemereignisse können auf unterschiedliche Weise auftreten und detektiert werden.

In einer ersten Variante wird die Kommunikationsverbindung zwischen der zentralen Steuereinheit und der dezentralen Steuereinheit oder den dezentralen Steuereinheiten überwacht und ein Ausfall dieser Kommunikationsverbindung als erstes Systemereignis festgestellt. Die dezentrale Steuereinheit geht von der Annahme aus, dass bei einer Störung der Kommunikation zwischen den zentralen und dezentralen Steuereinheiten auch eine Störung der Übertragung von Steuersignalen von der zentrale Steuereinheit zum zugehörigen Netzsegment gestört ist oder sein könnte, weshalb die dezentrale Steuereinheit die Steuerung des zugeordneten Netzsegments übernimmt.

Vorzugsweise ist in wenigstens einem der dezentralen Steuersegmente ein Überwachungsmodul vorgesehen, welches die Verbindung zwischen der zentralen Steuereinheit und der dezentralen Steuereinheit durch Vergleich von Daten oder Signalen permanent prüft, die vom dezentralen Steuersegment zur zentralen Steuereinheit übertragen und von der zentralen Steuereinheit zurück zum dezentralen Steuersegment gespiegelt werden, um im Falle einer Abweichung, die vorzugsweise einen Schwellenwert übersteigt, ein erstes Systemereignis festzustellen.

In einer zweiten Variante wird das Auftreten eines von der zentralen Steuereinheit abgegeben Freigabebefehls und gegebenenfalls zugehöriger Parameter überwacht und das Auftreten des Freigabebefehls als zweites Systemereignis festgestellt. Sofern die zentrale Steuereinheit beispielsweise eine Fehlfunktion oder eine Überlastung oder einen Cyberangriff feststellt, kann ein Freigabebefehl an die dezentralen Steuersegmente oder die dezentralen Steuereinheiten abgegeben werden, um Ressourcen für die zentrale Steuereinheit freizusetzen. Die zentrale Steuereinheit kann die Kontrolle zur Steuerung einzelner oder mehrerer gegebenenfalls aller Netzsegmente bedarfsweise dezentralisieren.

Durch die Ermöglichung eines Lastausgleichs zwischen der zentralen Steuereinheit und den dezentralen Steuereinheiten ist es auch möglich, die zentrale Steuereinheit permanent zu entlasten und einfacher zu konzipieren.

Der Freigabebefehl ist für eine zuvor festgelegte Zeitdauer oder eine mit dem Freigabebefehl übertragene Angabe einer Zeitdauer oder bis auf Widerruf durch die zentrale Steuereinheit gültig.

In einer dritten Variante wird die Integrität der von der zentralen Steuereinheit übertragenen Daten durch Vergleich mit lokal ermittelten oder gespeicherten Daten geprüft, und fehlende Integrität als viertes Systemereignis festgestellt wird. Durch diese Massnahme wird einerseits verhindert, dass sich ein Cyberangriff ungehindert über das gesamte Stromversorgungssystem ausbreiten kann. Andererseits können die dezentralen Steuereinheiten die Kontrolle über Steuerung der Netzsegmente übernehmen, bis die Integrität der zentralen Steuereinheit wieder erstellt ist.

In einer vierten Variante werden in den dezentralen Steuersegmenten Netzparameter, wie die Netzspannung und/oder die Netzfrequenz überwacht und Abweichungen von einem vorgesehenen Spannungsbereich oder Frequenzbereich als viertes Systemereignis festgestellt. Bei diesem Systemereignis ist die zentrale Steuereinheit operativ, hat aber ein im Stromversorgungsnetz entstandenes Problem möglicherweise nicht erkannt, weshalb die dezentrale Steuereinheit die Kontrolle übernimmt, um korrigierend einzugreifen. Da die Kommunikation zwischen der zentralen Steuereinheit und den dezentralen Steuereinheiten in diesem Fall besteht, wird die Übernahme der Kontrolle vorzugsweise von einer Kommunikation zwischen der zentralen Steuereinheit und den dezentralen Steuereinheiten begleitet. Beispielsweise erfolgt eine Anfrage an die zentrale Steuereinheit, die in der Folge einen Freigabebefehl abgibt.

Grundsätzlich können weitere Systemereignisse berücksichtigt werden, nach deren Auftreten eine Übernahme der Kontrolle über die Steuerung eines Netzsegments erfolgt. Beispielsweise können lokal auftretende Naturereignisse, Unfälle oder Feuer als Systemereignisse bewertet werden, bei denen sinnvollerweise die Kontrolle automatisch von der dezentralen Steuereinheit übernommen wird.

Vorzugsweise ist vorgesehen
- dass in wenigstens einem der dezentralen Steuersegmente aktuelle oder historische oder aktuelle und historische Netzzustandsdaten, wie die Netzspannung, fliessende Ströme, die Netzfrequenz oder die Phase der Netzspannung des zugeordneten Netzsegments und aktuelle oder historische oder aktuelle und historische Zustandsdaten von Netzelementen und Schaltelementen des zugeordneten Netzsegments ermittelt und als Eingangsgrössen des Steuerungsprozesses verwendet werden;
- dass die ermittelten Netzzustandsdaten mit Sollbereichen verglichen werden; und
   dass einzelne oder alle Netzelemente von der dezentralen Steuereinheit vom zugehörigen Netzsegment abgeschaltet werden, falls die Netzzustandsdaten ausserhalb festgelegter Sollbereiche liegen, oder
   dass einzelne oder alle Netzelemente von der dezentralen Steuereinheit dem zugehörigen Netzsegment vorzugsweise gestaffelt zugeschaltet werden, falls die Netzzustandsdaten innerhalb der festgelegten Sollbereiche liegen und vorzugsweise festgestellt wurde, dass die Netzelemente vor dem Systemereignis zugeschaltet waren und/oder von der zentralen Steuereinheit kein Abschaltbefehl vor dem aufgetretenen Systemereignis abgegeben wurde.

Die dezentrale Steuereinheit kann nach einem Systemereignis daher Netzsegmente abschalten oder vom Netz nehmen, falls beispielsweise die Netzspannung oder die Netzfrequenz deren Sollwerte unterschreiten. Dadurch wird verhindert, dass ein sogenanntes Brownout oder ein teilweiser Netzausfall fortschreiten und zu einem Totalausfall führen kann.

Sofern nach einem Systemereignis, dass mit einem teilweisen oder vollständigen Netzausfall verbunden war, kann die dezentrale Steuereinheit Netzelement im zugehörigen Netzsegment wieder zuschalten, falls die Netzzustandsdaten innerhalb der festgelegten Sollbereiche liegen.

Durch die Ermittlung historischer Zustandsdaten wird festgestellt, ob Netzelemente vor dem Systemereignis dem Netzsegment zugeschaltet waren oder ob diese durch die zentrale Steuereinheit ausgeschaltet wurden. Sofern Netzelemente vor dem Systemereignis abgeschaltet waren, kann auf deren Zuschaltung verzichtet werden. Es können jedoch Regeln festgelegt werden, gemäss denen die dezentrale Steuereinheit zuvor ausgeschaltete Netzelemente dem zugehörigen Netzsegment zugeschaltet werden. Falls beispielsweise eine Stromquelle oder ein Generator abgeschaltet war und die Netzfrequenz im unteren Teil des Sollbereichs liegt, kann eine Regel vorgesehen sein, dass die betreffende Stromquelle zugeschaltet wird, um das Netz zu stabilisieren.

Nachfolgend wird die Erfindung anhand von Zeichnungen näher erläutert. Dabei zeigt:

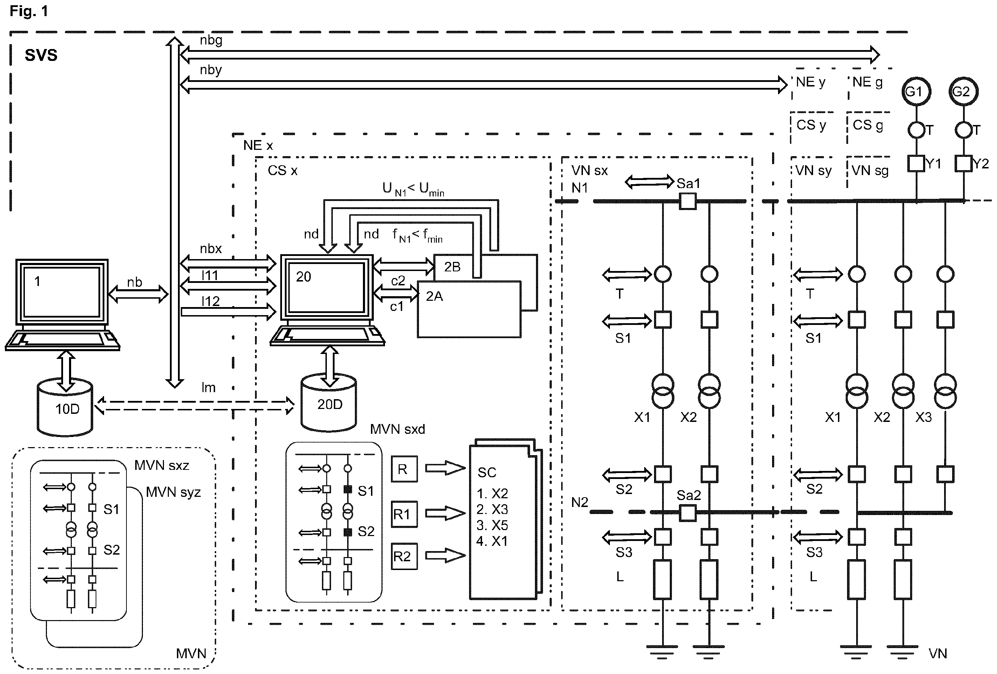

- Fig. 1: ein Stromversorgungssystem SVS, das ein Stromversorgungsnetz VN mit zwei oder auch mehreren Netzebenen N1, N2 unterschiedlicher Spannung und mehrere Netzsegmente VNsx, VNsy, eine zentrale Steuereinheit 1 und mehrere dezentrale Steuersegmente CSx, CSy, CSg mit je einer dezentralen Steuereinheit 20 und wenigstens einem Steuermodul 2A, 2B umfasst, die zusammen mit einem zugehörigen Netzsegment VNsx, VNsy je eine Netzeinheit NEx, NEy, NEg bilden, die bei auftretenden Systemereignissen, die vom Normalbetrieb des Stromversorgungssystems SVS abweichen, von den dezentralen Steuersegmenten CSx, CSy, CSg steuerbar sind;

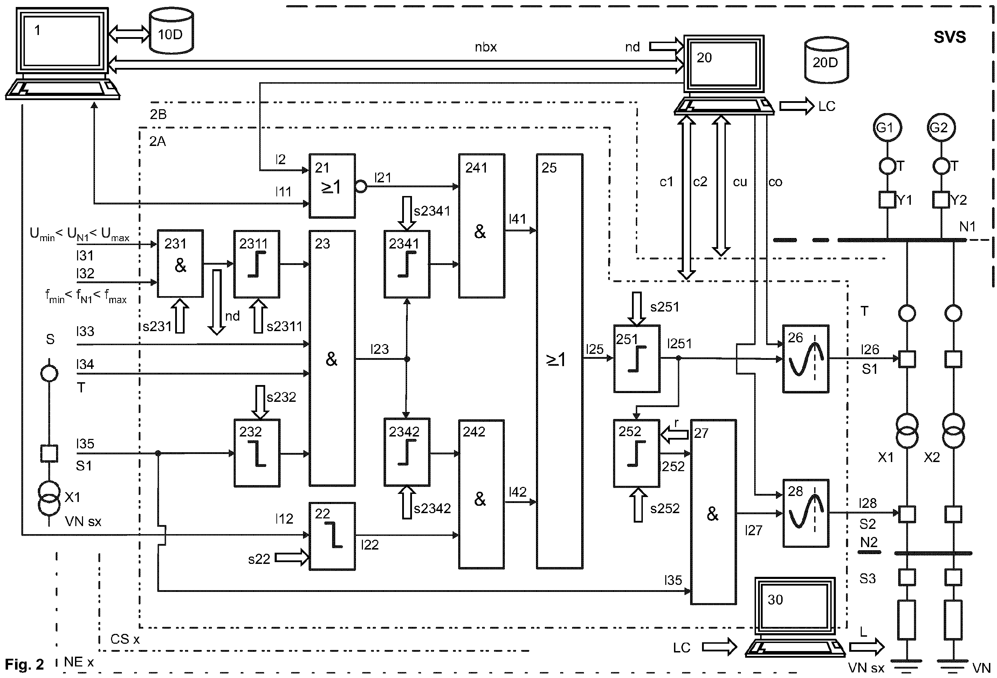

- Fig. 2: das Stromversorgungssystem SVS von Fig. 1 mit einer vorzugsweise ausgestalteten Netzeinheit NEx, die zur Erfassung und Behandlung unterschiedlicher Systemereignisse geeignet ist und einen hybriden Betrieb erlaubt, in dem die zentrale Steuereinheit 1 und die dezentrale Steuereinheit 20 je nach Bedarf und vorliegender Situation Steueraufgaben übernehmen;

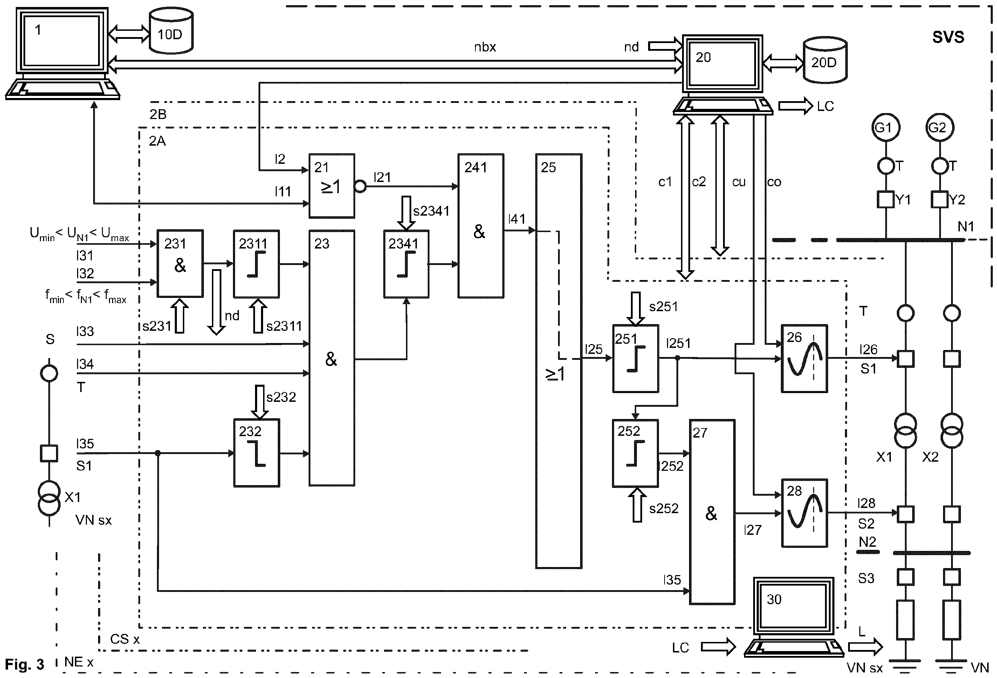

- Fig. 3: das Stromversorgungssystem SVS von Fig. 2 in einer vereinfachten Ausgestaltung;

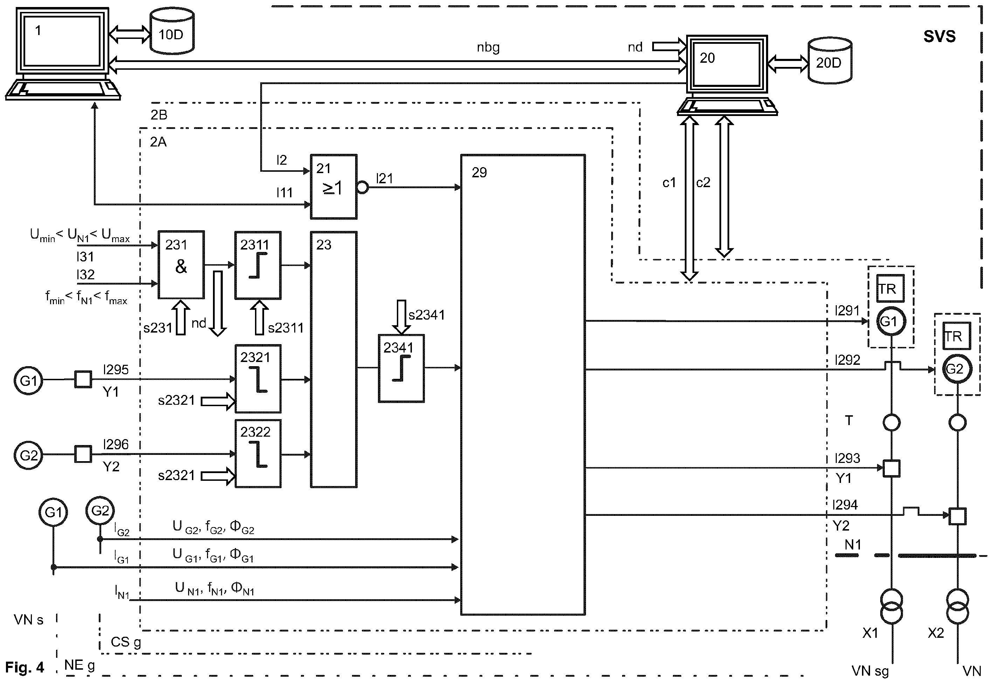

- Fig. 4: das Stromversorgungssystem SVS von Fig. 1 mit einer Netzeinheit NEg, die ein Netzsegment VNsg mit zwei Generatoren G1, G2 und ein dezentrales Steuersegment CSg umfasst, das zur Steuerung der Generatoren G1, G2 und zur synchronen Zuschaltung der Generatoren G1, G2 an die erste Netzebene N1 geeignet ist; und

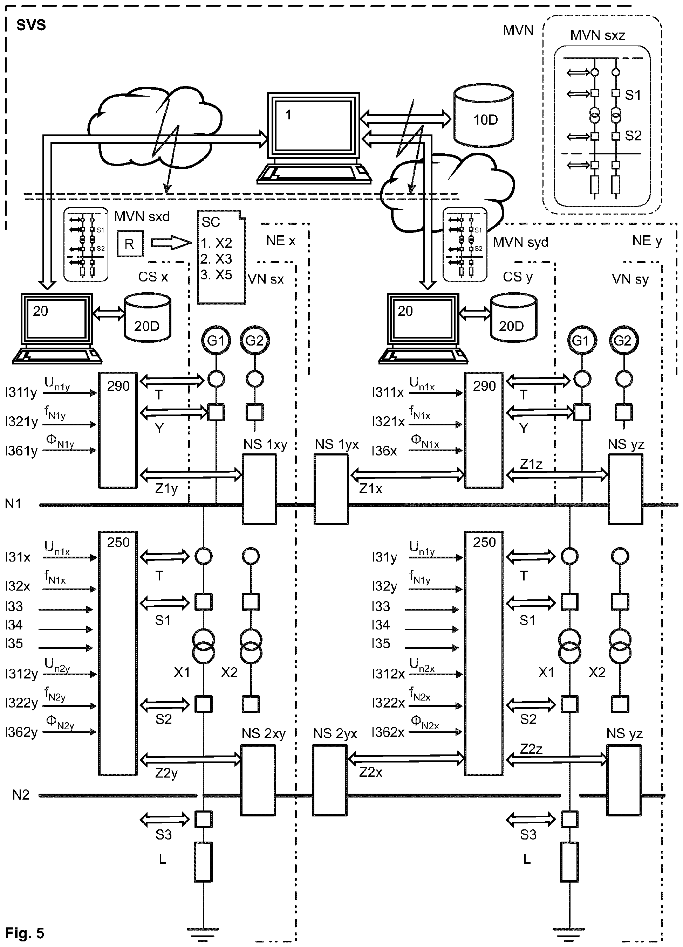

- Fig. 5: das Stromversorgungssystem SVS von Fig. 1 mit zwei Netzeinheiten NEx, NEy, die unabhängig voneinander zum Netzaufbau auf der ersten Netzebene 1 und auf der zweiten Netzebene 2 geeignet und auf der ersten Netzebene 1 und auf der zweiten Netzebene 2 miteinander koppelbar sind, sobald der Netzaufbau beidseitig erfolgt ist.

Fig. 1 zeigt exemplarisch ein Stromversorgungssystem SVS mit einem Stromversorgungsnetz VN, das im Zentralbetrieb von einer zentralen Steuereinheit 1, beispielsweise einem Kontrollsystem SCADA (Supervisory Control and Data Acquisition System) anhand eines zentralen Steuerprogramms, das Steuermodule aufweist, gesteuert wird. Das Stromversorgungsnetz VN ist in mehrere Netzsegmente VNsx, VNsy, VNsg aufgeteilt, die von den Netzebenen N1, N2 durchlaufen werden und von denen zwei exemplarisch gezeigt sind.

Jedem der Netzsegmente VNsx, VNsy, VNsg ist ein dezentrales Steuersegment CSx, CSy, CSg zugeordnet, das eine dezentrale Steuereinheit 20 und wenigstens ein Steuermodul 2A, 2B umfasst. Die dezentrale Steuereinheit kommuniziert über Datenleitungen c1, c2 mit den Steuermodulen 2A, 2B.

Jedes der Netzsegmente VNsx, VNsy, VNsg bildet zusammen mit dem zugehörigen Steuersegment CSx, CSy, CSg je eine Netzeinheit NEx, NEy. Beispielsweise ist jeder der Netzeinheiten NEx, NEy, NEg ein Softwaremodul des zentralen Steuerprogramms zugeordnet. Die Netzeinheiten NEx, NEy, NEg können gleich oder unterschiedlich ausgestaltet sein und sind nur exemplarisch gezeigt. Beispielsweise sind in einer ersten Netzeinheit NEy zwei Netzelemente, beispielsweise Transformatoren X1, X2, mit zugehörigen Schaltelementen, Trennschalter T wie Leistungsschaltern S1, S2, und in einer zweiten Netzeinheit NEy drei Netzelemente, beispielsweise Transformatoren X1, X2, X3 mit zugehörigen Schaltelementen S1, S2 vorgesehen.

Für jeden der Leistungsschalter S1, S2 sind in einem Stromversorgungsnetz VN üblicherweise mehrere Trenner oder Trennschalter T auf verschiedenen Sammelschienen vorhanden.

Die Netzsegmente VNsx, VNsy, VNsg zeigen elementare elektrische Schaltungen mit Transformatoren X1, X2, X3, die einerseits durch Leistungsschalter S1 und Trennschalter T mit der ersten Netzebene N1 und anderseits durch zweite Leistungsschalter S2 mit der zweiten Netzebene N2 verbunden oder verbindbar sind. Weiterhin sind Lasten L über Lastschalter S3 an die zweite Netzebene N2 angeschlossen oder anschliessbar. Von den dezentralen Steuereinheiten 20 sind vorzugsweise alle Schalter S1, S2 und S3 steuerbar.

Das Netzsegment VNsg rechts oben in Fig. 1 symbolisch gezeigt umfasst zwei Generatoren G1, G2, die über Trennschalter T und Leistungsschalter Y1; Y2 an die erste Netzebene N1 anschliessbar sind.

Von den dezentralen Steuereinheiten 20 sind vorzugsweise alle Schalter S1, S2, S3; Y1, Y2 steuerbar.

Gezeigt ist ferner eine dritte Netzeinheit NEg, die ein dezentrales Steuersegment CSg und ein Netzsegment VNsg mit zwei Netzelementen in der Ausgestaltung von Generatoren G1, G2 umfasst, die durch Trennschalter T und Schaltelemente Y1, Y2 an die erste Netzebene N1 anschaltbar sind.

Die Netzeinheiten NEy und NEg sind schematisch gezeigt. Weitere Netzeinheiten NE können in beliebiger Anzahl vorgesehen sein.

Die Netzelemente X1, X2, X, G1, G2 bzw. die damit verbundenen Schaltelemente S1, S2, S3, Y1, Y2 sind von den dezentralen Steuereinheiten 20 mittels den Steuermodulen 2A, 2B steuerbar.

Die korrekte Ausführung der Ansteuerung der Netzelemente X1, X2, X, G1, G2 und Schaltelemente S1, S2, S3, Y1, Y2 wird vorzugsweise überprüft. Sofern eine Schaltung nicht korrekt ausgeführt oder quittiert wurde, werden vorzugsweise Ersatzhandlungen vorgenommen. Beispielsweise werden äquivalente Netzelemente dem Netzsegment zugeschaltet. Beispielsweise wird der Transformator X1, der bisher nicht zugeschaltet war, anstelle des Transformators X2, der eine Störung zeigt, oder der Generator G1, der bisher nicht zugeschaltet war, anstelle des Generators G2, der eine Störung zeigt, an die erste Netzebene N1 zugeschaltet. Weiterhin kann eine Fehlermeldung abgegeben werden, welche dem Betriebs- oder Wartungspersonal des Stromversorgungssystems zugeführt wird.

Sofern der Status von Leistungsschaltern S1, S2 unklar ist, und ein Transformator X1 nicht vom Netz N1, N2 genommen werden konnte, so werden weitere Schaltvorgänge vorgenommen, um diesen Transformator X1 zu isolieren und gesichert vom Netz N1, N2 zu nehmen. Gegebenenfalls werden benachbarte Stromleiter unterbrochen. Vorzugsweise werden daher für jedes Netzelement alternative Schaltmittel oder Ersatzschaltvorgänge definiert und gespeichert, die eine alternative Abschaltung des betreffenden Netzelements sicherstellen. In Fig. 1 sind in den Netzebenen N1, N2 alternative Schaltelemente Sa1, Sa2 vorgesehen, die betätigt werden, falls die primären Schaltmittel, d.h. die Leistungsschalter S1 und S2 einen undefinierten Zustand zeigen und nicht mehr betätigt werden können. Die Alternativen Schaltelemente Sa1, Sa2 werden derart vorgesehen, dass das betreffende Netzelement sicher vom Netz N1, N2 genommen werden kann und die Funktion weiterer Netzelemente möglichst nicht beeinträchtigt wird.

In der gezeigten Ausgestaltung ist die zentrale Steuereinheit 1 einerseits mit einer zentralen Datenbank 10D und anderseits über einen Datenbus nb und mehrere Abzweigungen nbx, nby, nbg mit den dezentralen Steuereinheiten 20 der dezentralen Steuersegmente CSx, CSy, CSg verbunden, die ihrerseits mit einer dezentralen Datenbank 20D verbunden sind. Durch einen strichpunktierten Doppelpfeil ist symbolisiert, dass Teile der Daten die in der zentralen Datenbank gespeichert sind und die die Netzeinheit NEx betreffen, vorzugsweise zur dezentralen Datenbank 20D der Netzeinheit NEx übertragen werden.

Die Daten des Stromversorgungsnetzes VN sind daher vorzugsweise zentral in der zentralen Steuereinheit 1 und dezentral mosaikartig in den dezentralen Steuereinheiten 20 gespeichert. Die Informationen des Stromversorgungsnetzes VN, vorzugsweise die Netztopologie, das Mengengerüst, netzabhängige und netzunabhängige Informationen zu den Netzelementen und zu den Schaltelementen, Steuerinformationen und Organisationsinformationen sind daher vorzugsweise redundant vorhanden, sodass die zentral gespeicherten Informationen in einem dezentralen Mosaik gespeichert sind.

Fig. 1 zeigt exemplarisch, dass die Netzsegmente VNsx, VNsy, VNsg als Modelle oder Teilmodelle MVNsxz, MVNsyz in der zentralen Datenbank 10D vorzugsweise als Teil eines gesamten Modells MVN gespeichert sind. Das zentrale Modell MVNsxz des Netzsegments VNsx wurde über eine Datenleitung oder einen Datenkanal lm zur dezentralen Datenbank 20D übertragen und wird als dezentrales Modell MVNsxd verwaltet, überwacht und gegebenenfalls bearbeitet.

Wie in [2] beschrieben wird vorzugsweise eine Online-Netztopologie des lokalen Netzes erstellt und aufrechterhalten, indem kontinuierlich verschiedene Klassen lokaler Messungen durchgeführt und Sensordaten erfasst und auf das Systemmodell abgebildet werden. Bei der vorliegenden Lösung erfolgt die Aktualisierung der Modelle parallel in der zentralen Steuereinheit 1 und in der dezentralen Steuereinheit 20. Bei diesen vorzugsweisen Massnahmen ist hingegen zu beachten, dass auch mit stark vereinfachten Modellen gearbeitet werden kann.

Die dezentrale Steuereinheit 20 überprüft vorzugsweise periodisch die von der zentralen Steuereinheit 1 übertragenen Daten mit den lokal ermittelten und gespeicherten Daten, um unzulässige Abweichungen und somit ein drittes Systemereignis festzustellen. Fig. 1 zeigt, dass das zentrale Modell sxz des Netzsegments VNsx und das dezentrale Modell MVNsxd, das von der dezentralen Steuereinheit 20 verwaltet wird voneinander abweichen.

Ein von der zentralen Steuereinheit 1 übermitteltes zentrales Modell MVNsxz, welches nach der Verifizierung und Überprüfung, in das das dezentrale Modell MVNsxd umbenannt wird auch dezentral kontinuierlich aktualisiert, indem vorzugsweise kontinuierlich verschiedene Klassen lokaler Messungen durchgeführt und Sensordaten erfasst und auf das dezentrale Modell MVNsxd abgebildet werden.

Bei der periodischen Übertragung und Überprüfung eines zentralen Modells MVNsxz hat die dezentrale Steuereinheit 20 im vorliegenden Beispiel festgestellt, dass die Schalter S1 und S2 geschlossen sind, und hat dies entsprechend in das dezentrale Modell MVNsxd eingetragen. Das aktuell von der zentralen Steuereinheit 1 übertragene zentrale Modell MVNsxz meldet hingegen, dass die Schalter S1 und S2 geöffnet sind, weshalb das zentrale Modell MVNsxz nicht übernommen und ein drittes Systemereignis festgestellt wird.

Anhand von Regeln R, R1, R2 wird eine Liste mit gestaffelten Netzelementen erstellt, denen eine Rangordnung zugeordnet wird, in der sie dem Stromversorgungsnetz VN zugeschaltet oder vom Stromversorgungsnetz VN abgeschaltet werden. Vorzugsweise wird anhand von ersten Regeln R1 eine Liste erstellt, mit der die Netzelemente dem Stromversorgungsnetz VN zugeschaltet werden. Anhand von zweiten Regeln R2 wird vorzugsweise eine Liste erstellt, mit der die Netzelemente vom Stromversorgungsnetz VN abgeschaltet werden.

Besonders einfach können die Listen mit gestaffelten Netzelementen erstellt werden, indem die Regeln R, R1, R2 mit dem dezentrale Modell MVNsxd verknüpft werden.

Zusätzlich kann vorgesehen werden, dass die Zuschaltung der Netzelemente innerhalb eines Zeitrasters, vorzugsweise zu festgelegten Zeitpunkten innerhalb eines sich periodisch wiederholenden Intervalls erfolgt. Beispielsweise werden Intervalle von zum Beispiel 10 Minuten festgelegt, innerhalb denen den Netzeinheiten bestimmte Zuschaltzeitpunkte zugeordnet werden. Für jedes der Netzelemente oder für Gruppen von Netzelementen können Zeitpunkte innerhalb des Intervalls oder eines entsprechenden Zeitrasters festgelegt werden.

Exemplarisch sind die Staffelungen der Netzelemente in Listen eingetragen. Gemäss der gezeigten Liste und den angewendeten Regeln R oder R1 erfolgt zuerst die Zuschaltung der Transformatoren X2, die beispielsweise eine hohe Transformatorimpedanz oder Netzimpedanz und eine hohe Priorität aufweisen. Zweites erfolgt die Zuschaltung der Transformatoren X3, die beispielsweise eine hohe Transformatorimpedanz oder Netzimpedanz aber eine geringere Priorität aufweisen. Drittens erfolgt die Zuschaltung von Transformatoren X5, die eine tiefe Transformatorimpedanz oder Netzimpedanz aufweisen. Viertens erfolgt die Zuschaltung der Transformatoren X1, die eine hohe Transformatorimpedanz oder Netzimpedanz aber keine relevante Priorität aufweisen.

Anstelle der Registrierung der Staffelung in Listen, kann die Rangfolge auch direkt in das Modell eingetragen werden.

Anhand der Verwendung des dezentralen Modell MVNsxd kann die Staffelung der Netzeinheiten unter Verwendung der vorgegebenen Regeln und somit auch der Netzwiederaufbau nach erfolgtem Netzausfall daher besonders einfach erfolgen.

Exemplarisch ist gezeigt, dass die zentrale Steuereinheit 1 und die dezentralen Steuereinheiten 20 durch weitere unidirektionale oder bidirektionale Übertragungskanäle 111, 112 miteinander verbunden sind, die gegebenenfalls in den Datenbus nb integriert oder als gesonderte Leitungen realisiert sind. Die Übertragungsleitungen oder Datenübertragungskanäle sind vorzugsweise redundant vorgesehen, sodass eine hohe Verfügbarkeit des Datenübertragungssystems vorliegt. Beispielsweise sind ein Funknetz und ein drahtgebundenes Netzwerk vorgesehen, die beispielsweise nach den Internetprotokollen arbeiten.

Ferner ist gezeigt, dass der dezentralen Steuereinheit 20 auch Rückmeldungen von den Steuermodulen 2A, 2B zugeführt werden können, die beispielsweise Messungen des Zustands des zugeordneten Netzsegments VNsx, beispielsweise physikalische Daten der ersten und/oder zweite Netzebene N1, N2 oder Zustandsdaten der zugeordneten Netzelemente X1, X2, X, G1, G2 und Schaltelemente S1, S2, S3, Y1, Y2 betreffen.

Die Steuersegmente CSx, CSy, CSg mit den dezentralen Steuereinheiten 20, die dezentrale Steuerprogramme aufweisen, sind derart ausgelegt, dass sie die zugeordneten Netzsegmente VNsx, VNsy, VNsg teilweise oder vollständig steuern können. Im Falle eines Ausfalls der zentralen Steuereinheit 1 mit Verlust der Kontrolle über die Netzeinheiten NEx, NEy, das als Systemereignis erkannt wird, wird die Kontrolle und die Steuerung der Netzeinheiten NEx, NEy, NEg erfindungsgemäss von den dezentralen Steuereinheiten 20 übernommen.

Das erfindungsgemässe Stromversorgungssystem SVS kann daher in einem Zentralbetrieb, in dem die Steuerung der Netzeinheiten NEx, NEy, NEg durch die zentrale Steuereinheit 1 erfolgt, und in einem Dezentralbetrieb, in dem die Steuerung der Netzeinheiten NEx, NEy, NEg durch die dezentralen Steuereinheiten 20 erfolgt, arbeiten.

Als Normalbetrieb wird der Zentralbetrieb des Stromversorgungssystems SVS bezeichnet, bei dem keine Störungen, wie Fehlfunktionen oder Kommunikationsfehler, oder Eingriffe durch das System selbst oder den Betreiber auf der Steuerebene oder der Netzebene erfolgen.

Sobald hingegen Störungen oder Eingriffe auf der Steuerebene und/oder Störungen auf der Ebene des Stromversorgungsnetzes VN auftreten, wird dies als Systemereignis erkannt, nach dessen Detektion die dezentralen Steuereinheiten 20 der dezentralen Steuersegmente CSx, CSy, CSg automatisch die Steuerung des zugeordneten Netzsegments VNsx, VNsy, VNsg ganz oder teilweise übernehmen.

Ein teilweiser oder vollständiger Wechsel zwischen Zentralbetrieb und Dezentralbetrieb kann auch wahlweise durch den Netzbetreiber eingeleitet werden. Bei hohen Belastungen kann die zentrale Steuereinheit 1 auch Teile des Stromversorgungssystems SVS in den Dezentralbetrieb überführen.

Systemereignisse können auf vielfältige Weise definiert und detektiert werden. Beispielsweise wird vorgesehen,
a) dass die Kommunikationsverbindung zwischen der zentralen Steuereinheit 1 und der dezentralen Steuereinheit 20 überwacht und ein Ausfall dieser Kommunikationsverbindung als erstes Systemereignis festgestellt wird, und/oder
b) dass das Auftreten eines von der zentralen Steuereinheit 1 abgegeben Freigabebefehls und gegebenenfalls zugehöriger Parameter überwacht und das Auftreten des Freigabebefehls als zweites Systemereignis festgestellt wird, und/oder
c) dass die Integrität der von der zentralen Steuereinheit 1 übertragenen Daten durch Vergleich mit lokal ermittelten oder gespeicherten Daten geprüft wird, und fehlende Integrität als drittes Systemereignis festgestellt wird; und/oder
d) dass die Netzspannung U und/oder die Netzfrequenz f des zugeordneten Netzsegments VNsx, VNsy, VNsg vom dezentralen Steuersegment CSx, CSy, CSg überwacht werden und eine Abweichung von einem vorgesehenen Spannungsbereich oder Frequenzbereich als viertes Systemereignis festgestellt wird.

Über eine Leitung oder einen bidirektionalen Datenkanal 111 werden beispielsweise Überwachungssignale zwischen der zentralen Steuereinheit 1 und der dezentralen Steuereinheit 20 ausgetauscht. Signale, die von der dezentralen Steuereinheit 20 abgegeben und von der zentralen Steuereinheit 1 zurück gespiegelt werden in der dezentralen Steuereinheit 20 auf Übereinstimmung geprüft. Im Falle einer Abweichung, die einen vorgesehenen Rahmen oder Schwellwert überschreitet, wird eine Fehlfunktion, ein Kommunikationsfehler oder ein Ausfall der zentralen Steuereinheit und somit ein erstes Systemereignis erkannt.

Über eine Leitung 112 oder über einen unidirektionalen oder bidirektionalen Datenkanal kann ein Freigabebefehl mit einem Attribut von der zentralen Steuereinheit 1 an die dezentrale Steuereinheit 20 übertragen werden, dessen Detektion ein zweites Systemereignis darstellt, nämlich die aktive Übergabe der Kontrolle der Steuerung der Netzeinheit NEx von der zentralen Steuereinheit 1 an die dezentrale Steuereinheit 20. Durch das übertragene Attribut kann die Dauer der Gültigkeit des Freigabebefehls bestimmt werden.

Fig. 1 zeigt weiter, dass von den Steuermodulen 2A, 2B die Spannung U_{N1} und die Frequenz f_{N1} der ersten Netzebene N1 gemessen und mit Grenzwerten Uₘᵢₙ, Uₘₐₓ; fₘᵢₙ, fₘₐₓ verglichen wird. In diesem Ausführungsbeispiel wird vom Steuermodul 2A an die Steuereinheit 20 gemeldet, dass die Spannung U_{N1} unterhalb des zulässigen Minimalwerts Uₘᵢₙ liegt. Vom zweiten Steuermodul 2B wird gemeldet, dass die Frequenz f_{N1} unterhalb des zulässigen Minimalwerts fₘᵢₙ liegt. Da von der zentralen Steuereinheit 1 gegebenenfalls keine Störungsmeldung vorliegt, geht die dezentrale Steuereinheit 20 davon aus, dass die zentrale Steuereinheit 1 die Kontrolle verloren hat, weshalb ein viertes Systemereignis festgestellt wird.

Die genannten Systemereignisse können auch kumulativ auftreten. Ferner können weitere Systemereignisse, wie Einwirkungen von Feuer, Explosionen oder Wasser berücksichtigt werden.

Nach Detektion eines Systemereignisses übernimmt die jeweilige dezentrale Steuereinheit 20 die Kontrolle über das zugeordnete Netzsegment VNsx.

Die Abweichung der Spannung U_{N1} der ersten Netzebene N1 vom Grenzwert Uₘᵢₙ kann auch einen totalen Netzausfall betreffen, wonach ein dezentralisierter Netzwiederaufbau unter Kontrolle der dezentralen Steuereinheiten 20 erfolgt.

Fig. 2 zeigt das erfindungsgemässe Stromversorgungssystem SVS von Fig. 1 mit einer vorzugsweise ausgestalteten Netzeinheit NEx, die zur Erfassung und Behandlung unterschiedlicher Systemereignisse geeignet ist und die einen hybriden Betrieb des Stromversorgungssystems SVS erlaubt, in dem die zentrale Steuereinheit 1 und die dezentrale Steuereinheit 20 je nach Bedarf und Situation alternierend Aufgaben zur Steuerung des zugeordneten Netzsegments VNsx übernehmen können. Die Beschreibung des Stromversorgungssystems SVS erfolgt exemplarisch für die Netzeinheit NEx in dieser vorzugsweisen Ausgestaltung.

Die Kommunikation zwischen der zentralen Steuereinheit 1 und den dezentralen Steuereinheiten 20 sowie die Ermittlung von Systemereignissen wurde bereits mit Bezug zu Fig. 1 beschrieben.

Über die Leitung 111, die an ein Verfahrensmodul 21 angeschlossen ist, wird die Funktion der zentralen Steuereinheit 1 und somit das Auftreten erster Systemereignisse überwacht.

Über die Leitung 112 werden Freigabebefehle von der zentralen Steuereinheit 1 an ein Verfahrensmodul 22 übertragen, welches den Freigabebefehl weiterleitet oder für eine bestimmte oder programmierbare Zeit aufrechterhält. Diese Zeitdauer wird durch einen Setzbefehl s22 dynamisch gesetzt. Die Übertragung eines Freigabebefehls wird daher am Ausgang des Verfahrensmoduls 22 als Auftreten eines zweiten Systemereignisses detektiert.

Über die Leitung 12 können von der dezentralen Steuereinheit 20 Signale zum Verfahrensmodul 21 übertragen werden, die das Auftreten erster, zweiter, dritter und vierter Systemereignisse repräsentieren. Ein erstes Systemereignis wird beispielsweise signalisiert, wenn die Datenkommunikation über die Busleitung nbx ausfällt. Ein zweites Systemereignis wird signalisiert, falls der Freigabebefehl über die Busleitung nbx übertragen wurde. Ein drittes Systemereignis wird signalisiert, falls der Vergleich von Daten der zentralen Steuereinheit 1 und der dezentralen Steuereinheit 20, beispielsweise der oben beschriebene Vergleich des zentralen Modells MVNsxz und des dezentralen Modells MVNsyd negativ ausgefallen ist. Ein viertes Systemereignis wird signalisiert, falls beispielsweise vom Verfahrensmodul 231 mit dem Signal nd gemeldet wurde, dass die Spannung U oder die Frequenz f der ersten und/oder zweiten Netzebene N1, N2 ausserhalb des Sollbereichs liegt und gegebenenfalls ein Netzausfall aufgetreten ist.

In all diesen Fällen wird von den Verfahrensmodulen 21, 22 eine logisch 1 an den Eingang des nachfolgenden UND-Tors 241 oder 242 angelegt und dadurch das Steuermodul 2A aktiviert.

Durch das Verfahrensmodul 23 wird in der Folge geprüft, ob die Bedingungen gegeben sind, um die dezentrale Steuerung zu vollziehen und in dieser vorzugsweisen Ausgestaltung die Schaltelemente S1 und S2 über die Schaltmodule 26, 28 im zugeordneten Netzsegment VNsx zu betätigen. Am Ausgang des Verfahrensmoduls 23 erscheint daher ein Startsignal oder Aktivierungssignal, oder, falls die Funktion des Steuermoduls 2A oder 2B dies vorsieht, ein Schaltsignal.

In der gezeigten Ausgestaltung werden nach Detektion eines vierten Systemereignisses Ausschaltkommandos von der dezentralen Steuereinheit 20 über Signalleitungen co, cu direkt an die Schaltmodule 26, 28 abgegeben. In einem ersten Schritt wird der Leistungsschalter S2 geöffnet und der Transformator X1 von der zweiten Netzebene N2 getrennt. Mit einer Verzögerung wird der erste Leistungsschalter S1 geöffnet und der Transformator X1 von der ersten Netzebene N1 getrennt.

Die nachstehend beschriebenen Verfahrensschritte betreffen das erneute Zuschalten des von den Netzebenen N1, N2 getrennten Transformators X1, falls das Verfahrensmodul 23 feststellt, dass dazu die Bedingungen erfüllt sind.

Durch das Verfahrensmodul 231, dem Messleitungen 131, 132 zugeführt werden, wird geprüft, ob die Spannung U_{N1} und deren Frequenz f_{N1} der ersten Netzebene N1 innerhalb des festgelegten Sollbereichs liegen. Sofern dies zutrifft, wird dies vom Ausgang des Verfahrensmoduls 231 an das nächstfolgende Verfahrensmodul 2311 gemeldet, welches die Statusmeldung mit einer festen oder variablen Verzögerung weiterleitet, die durch ein Setzsignal s2311 festgelegt werden kann. Durch die Verzögerung wird sichergestellt, dass sich die Spannung U_{N1} auf der ersten Netzebene N1 stabilisiert hat.

Durch den Setzbefehl s231 ist das Verfahrensmodul 231 vorzugsweise programmierbar. Die Sollbereiche für die Netzspannung und die Netzfrequenz sind vorzugsweise einstellbar, sodass beispielsweise Netzelemente mit hoher Impedanz früher und Netzelemente mit tiefer Impedanz beispielsweise erst dann zugeschaltet werden, wenn der Netzwiederaufbau praktisch vollständig abgeschlossen ist und das Netz den Normalzustand erreicht hat.

Mit dem Signal nd wird der Netzzustand zudem der dezentralen Steuereinheit 20 gemeldet, die in Abhängigkeit vorliegender Regeln beispielsweise Abschaltsignale über die Leitungen cu, co abgibt, falls die Spannung U_{N1} und deren Frequenz f_{N1} ausserhalb der Sollbereiche liegen.

Über die Leitung 133 wird der Betriebszustand S der Anlage geprüft, die vom Servicepersonal aus dem automatischen Betrieb in den Servicebetrieb überführt werden kann, in dem das Personal, nicht aber die dezentrale Steuereinheit 20 Schaltvorgänge vornehmen kann.

Über die Leitung I34 wird geprüft, ob der Trennschalter T geschlossen ist, damit der Transformator x1 überhaupt mit der ersten Netzebene N1 verbunden werden kann.

Über die Leitung 135 wird der historische Schaltzustand des Leistungsschalters S1 geprüft. Sobald der Leistungsschalter S1 geöffnet wird, beginnt ein Timer, der mittels eines Signals s232 vorzugsweise auf einen bestimmten Wert gesetzt werden kann im Verfahrensmodul 232 zu laufen. Der Ausgang des Verfahrensmoduls 232 zeigt daher an, ob der Transformator X1 bis kurz vor Auftreten eines Systemereignisses der Netzebene N1 zugeschaltet war. Sofern dies nicht der Fall ist, verzichtet die Steuerlogik darauf, den zuvor normal abgeschalteten Transformator X1 wieder anzuschalten.

Auf der linken Seite sind der Trennschalter T, der erste Leistungsschalter S1 und der Transformator X1 des Netzsegments VNsx imaginär dargestellt, um die Zuordnung der Leitungen 134, 135 zu erklären.

Der Einschaltvorgang kann gestartet werden, falls am Ausgang des Verfahrensmoduls 2311 ein stabiles Netz gemeldet wird, die Leitung 133 keinen Servicebetrieb anzeigt, die Leitung 134 den geschlossenen Zustand des Trennschalters T zeigt und am Ausgang des Verfahrensmoduls 232 signalisiert wird, dass das Netzelement oder der Transformator X bis zum Auftreten des Systemereignisses den Netzebenen N1, N2 zugeschaltet war und somit beim Netzwiederaufbau erneut an die Netzebenen N1, N2 zu zuschalten ist.

Nachdem alle Bedingungen am Eingang des Verfahrensmoduls 23 für den Beginn des Netzwiederaufbaus erfüllt sind, wird über die Leitung 123 und gegebenenfalls verzögert durch Verfahrensmodule 2341, 2342 ein Startsignal zu den Verfahrensmodulen 241 und 242 übertragen.

Das Startsignal wird durch die Verfahrensmodule 2341, 2342 vorzugsweise verzögert, um sicherzustellen, dass genügend Stromerzeuger oder Generatoren G1, G2 an der ersten Netzebene N1 anliegen und die Zuschaltung des Netzelements oder der Netzelemente bzw. des Transformators X1 das Netz nicht bereits überlastet. Die Verzögerung der Verfahrensmodule 2341, 2342 ist über Setzbefehle oder Signalleitungen s2341, s2432 vorzugsweise fest oder wahlweise programmierbar. Falls beispielsweise alle Generatoren am Netz sind, kann die Verzögerung auf 0 gesetzt werden.

Die Meldung eines Systemereignisses an der Ausgangsleitung 121, 122 des Verfahrensmoduls 21 und/oder 22 bewirkt, dass wenigstens von einem der beiden Verfahrensmodule 241, 242 ein Aktivierungssignal oder ein Schaltbefehl über die Leitung 141 und/oder 142 zum Verfahrensmodul 25 übertragen wird, welches den Schaltbefehl über Ausgangsleitung 125, das Verfahrensmodul 251 und dessen Ausgangsleitung 1251 an das Schaltmodul 26 überträgt, welches mit dem Steuersignal I25 den ersten Leistungsschalter S1 betätigt, welcher den Transformator X1 über den geschlossenen Trennschalter T an die erste Netzebene N1 anschliesst.

Das Verfahrensmodul 251 wurde mittels des Setzbefehls s251 derart programmiert, dass die Weiterleitung des Schaltbefehls mit einer vorgesehenen Verzögerung oder zu einem bestimmten Zeitpunkt erfolgt, der derart gewählt ist, dass die Netzelemente oder Transformatoren X gestaffelt an die erste Netzebene N1 zugeschaltet werden. Die gestaffelte Zuschaltung erfolgt vorzugsweise unter Berücksichtigung der Eigenschaften der Netzelemente und/oder deren Priorität.

Wie eingangs beschrieben kann jedem Transformator ab einem bestimmten variablen oder fixen Zeitpunkt eine bestimmte Verzögerung zugeordnet werden. Beispielsweise kann ein Startzeitpunkt ein Startsignal zum Start des Netzwiederaufbau sein. Sofern der Netzwiederaufbau innerhalb eines periodisch ablaufenden Zyklus von beispielsweise 600 Sekunden erfolgt, so kann jedem Netzelement individuell ein einmaliger Startzeitpunkt zugeordnet werden. Die Transformatoren X1 und X2 werden beispielsweise bei Sekunde 111 und Sekunde 130 gestartet. Es sind verschiedene Abläufe mit festen oder variablen Verzögerungen und Startzeitpunkten realisierbar; wesentlich ist, dass die Zuschaltung gestaffelt erfolgt und die belastenden Einschaltströme nach Möglichkeit auf ein Minimum reduziert werden.

Das Ausgangssignal 1251, welches zur Betätigung des ersten Leistungsschalters S1 führt, wird mit einer weiteren Verzögerung über das Verfahrensmodul 252, welches mittels des Setzbefehls s252 programmierbar ist, dem zweiten Schaltmodul 28 zugeführt. Durch das Verfahrensmodul 252 wird bewirkt, dass die Zuschaltung des Transformators X1 an die zweite Netzebene N2 durch Betätigung des zweiten Leistungsschalters S2 erst erfolgt, nachdem der Transformator X1 an die erste Netzebene N1 angeschaltet wurde und ein Einschaltströme bereits abgeklungen sind.

Um sicherzustellen, dass der erste Leistungsschalter S1 zu diesem Zeitpunkt eingeschaltet ist, wird der Schaltzustand des ersten Leistungsschalters S1 über die Leitung 135 an das Verfahrensmodul 27 gemeldet, welches das Schaltsignal vom Verfahrensmodul 252 erst über die Ausgangsleitung 127 an das zweite Schaltmodul 28 weiterleitet, wenn die Betätigung des ersten Leistungsschalters S1 über die Leitung 135 bestätigt wurde.

Sofern das Schaltsignal über die Leitung 1252 dem Verfahrensmodul 27 zugeführt wurde, die Betätigung des ersten Leistungsschalters S1 über die Leitung 135 jedoch noch nicht bestätigt wurde, so wird vom Verfahrensmodul 27 vorzugsweise ein Reset-Signal r an das Verfahrensmodul 252 zurück übertragen, um den Verzögerungsvorgang noch einmal zu starten und dadurch zu verhindern, dass nach der Betätigung des ersten Leistungsschalters S1 der zweite Leistungsschalter S2 ohne die erforderliche Verzögerung betätigt wird.

In Fig. 2 sind ferner stationäre oder mobile Lasten L, beispielsweise elektrische Lokomotiven eingezeichnet, die, gesteuert durch eine lokale Steuereinheit 30, über eine Lastschalter S3 an die zweite Netzebene N2, beispielsweise eine Fahrleitungsebene, anschaut war sind.

In einer bevorzugten Ausgestaltung kommuniziert die dezentrale Steuereinheit 20 über einen Datenbus oder Kontrollbus mit der lokalen Steuereinheit 30, um nach dem Auftreten eines Systemereignisses, vorzugsweise unter Berücksichtigung des Netzzustandes, die Lasten L über die lokale Steuereinheit 30 zu steuern und bedarfsweise vom Netz zu nehmen.

Fig. 3 zeigt das Stromversorgungssystem SVS von Fig. 2 in einer vereinfachten Ausgestaltung. Der Freigabebefehl wird in dieser Ausgestaltung von der zentralen Steuereinheit 1 über die dezentrale Steuereinheit 20 und die Leitung oder den Datenbus 12 zum Verfahrensmoduls 21 übertragen. Die Leitung 112 und die Verfahrensmodule 22, 2342 und 242 entfallen in diesem Fall. Das Schaltsignal am Ausgang des Verfahrensmoduls 241 wird vorzugsweise direkt zum Eingang des Verfahrensmoduls 251 übertragen.

Fig. 4 zeigt das Stromversorgungssystem SVS von Fig. 3 mit der zentralen Steuereinheit 1 und mit einer Netzeinheit NEg, die ein Netzsegment VNsg mit zwei Generatoren G1, G2 und ein Steuersegment CSg mit einer dezentralen Steuereinheit 20 und zwei Steuermodulen und 2A, 2B umfasst, mittels denen die Generatoren G1, G2 und/oder Leistungsschalter Y1, Y2 in Abhängigkeit des Auftretens von Systemereignisse steuerbar sind.

Die Kommunikation zwischen der zentralen Steuereinheit 1 und der dezentralen Steuereinheit 20 erfolgt über den Datenbus nbg zur Ermittlung vorzugsweise aller Systemereignisse, wie dies mit Bezug zu Fig. 1, Fig. 2 oder Fig. 3 beschrieben wurde. Systemereignisse werden dem Verfahrensmodul 21 wiederum über Leitungen 12, 111 gemeldet.

Das Verfahrensmodul 23 prüft wiederum, ob alle Bedingungen für die Übernahme der Steuerung erfüllt sind und überträgt gegebenenfalls verzögert durch ein Verfahrensmodul 2341, dass vorzugsweise programmierbar ist, ein Startsignal oder Aktivierungssignal an ein Steuermodul 29.

Durch das Verfahrensmodul 231, das mit Messleitungen 131, 132 verbunden ist, wird wiederum geprüft, ob die Spannung U_{N1} und deren Frequenz f_{N1} der ersten Netzebene N1 innerhalb des festgelegten Sollbereichs liegen. Sofern dies zutrifft, wird dies vom Ausgang des Verfahrensmoduls 231 an das nächstfolgende Verfahrensmodul 2311 gemeldet, welches die Statusmeldung mit einer festen oder variablen Verzögerung weiterleitet, die durch ein Setzsignal s2311 festgelegt werden kann. Durch die Verzögerung wird sichergestellt, dass sich die Spannung U_{N1} auf der ersten Netzebene N1 stabilisiert hat.

Sollbereiche werden vorzugsweise entsprechend gewählt, damit die Generatoren G1, G2 mithelfen können, die Spannung U_{N1} und deren Frequenz f_{N1} in die Sollbereiche zu führen, die für die Verfahrensabläufe gemäss Fig. 2 und Fig. 3 vorgesehen sind. Für die Schaltung der Netzelemente G1, G2 ist die Netzfrequenz f_{N1} besonders kritisch. Bei einer zu tiefen Netzfrequenz f_{N1} werden Generatoren G1, G2 typischerweise zugeschaltet und bei einer zu hohen Netzfrequenz f_{N1} typischerweise vom Netz genommen.

Die Sollbereiche sind vorzugsweise mittels einer Setzbefehls s231 einstellbar, sodass eine individuelle Anpassung an die Generatoren G1, G2 und deren Einsatz in der Topologie des Stromversorgungsnetzes VN möglich ist.

Durch die Verfahrensmodule 2321 und 2322, denen über Leitungen 1295, 1296 der Schaltzustand der Schaltelemente Y1, Y2 gemeldet wird, wird wiederum geprüft, ob die Schaltelemente Y1, Y2 vor dem Auftreten des Systemereignisses geschlossen und die Generatoren G1, G2 an die erste Netzebene N1 angeschaltet waren. Beim Netzwiederaufbau werden normalerweise diejenigen Generatoren G1, G2 zugeschaltet, die zuvor an Netz waren. Bedarfsweise werden gemäss vorliegenden Regeln jedoch weitere Generatoren zugeschaltet.

Die Generatoren G1, G2 sind durch die Schaltelemente oder Generatorschalter Y1, Y2 mit der ersten Netzebene N1 verbindbar oder von dieser trennbar. Die Ansteuerung der Schaltelemente Y1, Y2 erfolgt durch ein Generatormodul 29 über Steuerleitungen 1293 und 1294. Das Generatormodul 29 kann zudem über weitere Steuerleitungen 1291 und 1292 direkt auf die Generatoren G1, G2 oder damit verbundene Elemente, wie einen Turbinenregler TR zugreifen, um beispielsweise die Drehzahl der Generatoren G1, G2 einzustellen.

Zur Steuerung der Zuschaltung oder Abschaltung der Generatoren G1, G2 werden dem Generatormodul 29 aktuelle Betriebsdaten der Generatoren G1, G2, wie die Generatorspannung U_{G1}, U_{G2}, die Frequenz f_{G1}, f_{G2} und die Phasenlage Φ1, Φ2 der Generatorspannung U_{G1}, U_{G2} über Leitungen l_{G1}, l_{G2} zugeführt.

Weiterhin werden dem Generatormodul 29 die Netzspannung U_{N1}, die Netzfrequenz f_{N1} und die Phasenlage Φ_{N} der Netzspannung U_{N1} über die Leitung l_{N1} zugeführt.

Beim Auftreten eines Systemereignisses, bei dem ein Netzwiederaufbau erforderlich ist, werden die Generatoren G1, G2 durch Betätigung der Schaltelemente Y1, Y2 vorzugsweise von der ersten Netzebene N1 getrennt und vorzugsweise in Bereitschaft gefahren. Durch die Steuerleitungen 1291 und 1292 werden die Generatoren G1 und G2 weiter in Betrieb gehalten, sodass sie für den Neustart ohne Verzögerung bereitstehen. Vorzugsweise wird die Drehzahl der Generatoren G1, G2 auf einem Wert gehalten, welcher der Frequenz f_{N1} der Spannung U_{N1} der ersten Netzebene N1 entspricht.

Die Wiedereinschaltung der Generatoren G1, G2 erfolgt nach deren Synchronisation mit der Netzfrequenz f_{N1} und der Phasenlage Φ_{N1} der Netzspannung U_{N1}. Durch die Steuerung über die Steuerleitungen 1291 und 1292 wird die Generatordrehzahl vorzugsweise von einem Wert, der unterhalb der Netzfrequenz f_{N1} liegt, auf eine Synchronisationsdrehzahl gehoben, die zumindest annähernd der Netzfrequenz f_{N1} entspricht. Anschliessend wird abgewartet bis die Phasenlage Φ1, Φ2 der Generatorspannung U_{G1}, U_{G2} sich der Phasenlage Φ_{N1} der Spannung U_{N1} der ersten Netzebene N1 um einen vorgegebenen Wert angenähert hat, wonach die Schaltelemente oder Generatorschalter Y1, Y2 betätigt werden.

Fig. 5 zeigt das Stromversorgungssystem SVS von Fig. 1 in einer weiteren vorzugsweisen Ausgestaltung mit zwei Netzeinheiten NEx, NEy, die unabhängig voneinander zum Netzaufbau auf der ersten Netzebene 1 und auf der zweiten Netzebene 2 geeignet und auf der ersten Netzebene 1 und auf der zweiten Netzebene 2 voneinander trennbar und miteinander koppelbar sind, sobald der Netzaufbau beidseitig erfolgt ist. Die Netzeinheiten NEx, NEy sind für dieses Ausführungsbeispiel identisch aufgebaut, weisen in der Praxis oft stark unterschiedliche Netztopologien mit zahlreichen Netzelementen auf, die gestaffelt zugeschaltet und/oder abgeschaltet werden können.

Die ersten Netzebenen N1 der Netzeinheiten NEx, NEy sind durch erste Schalteinheiten NS1xy, NS1yx mittels Schaltsignalen Z1y, Z1x voneinander trennbar und wieder miteinander verbindbar.

Die zweite Netzebene N2 der Netzeinheiten NEx, NEy sind durch zweite Schalteinheiten NS2xy, NS2yx mittels Schaltsignalen Z2y, Z2x voneinander trennbar und wieder miteinander verbindbar.

Die Elemente der dezentralen Steuersegmente CSx, CSy, wie sie in Fig. 2 und Fig. 3 beschrieben sind, sind je in einem Steuermodul 250 zusammengefasst. Die Elemente der dezentralen Steuersegmente CSx, CSy, wie sie in Fig. 4 mit Bezug zu einer Netzeinheit NEg beschrieben sind, sind je in einem Steuermodul 290 zusammengefasst.

Beim Auftreten eines Systemereignisses, das beispielsweise durch einen vollständigen Netzausfall begründet ist, werden die Netzeinheiten NEx, NEy durch die Schalteinheiten NS1xy, NS1yx; NS2xy, NS2yx auf beiden Ebenen N1, N2 voneinander getrennt. Der Netzausfall wurde beispielsweise durch einen Blitzeinschlag ausgelöst, der auch die Kommunikationsverbindungen zwischen der zentralen Steuereinheit 1 und den dezentralen Steuereinheiten 20 unterbrochen hat. Es sind somit gleichzeitig mehrere Systemereignisse aufgetreten.

Nach dem individuellen Aufbau und Synchronisation der Spannungen auf der ersten Netzebene N1 können die Segmente der ersten Netzebene N1 durch Betätigung der Schalteinheiten NS1xy, NS1yx miteinander verbunden werden. Nach dem individuellen Aufbau und Synchronisation der Spannungen auf der zweiten Netzebene N2 können die Segmente der zweiten Netzebene N2 durch Betätigung der Schalteinheiten NS2xy, NS2yx miteinander verbunden werden. Die Verbindung mit weiteren Netzsegmenten erfolgt auf gleiche Weise.

Signale I311y, I321y, I361y signalisieren dem Steuermodul 290 der ersten Netzeinheit NEx die Spannung, die Frequenz und die Phasenlage der ersten Netzebene N1 der zweiten Netzeinheit NEy.

Signale I311x, I321x, I361x signalisieren dem Steuermodul 290 der zweiten Netzeinheit NEy die Spannung, die Frequenz und die Phasenlage der ersten Netzebene N1 der ersten Netzeinheit NEx.

Signale I312y, I322y, I362y signalisieren dem Steuermodul 250 der ersten Netzeinheit NEx die Spannung, die Frequenz und die Phasenlage der zweiten Netzebene N2 der zweiten Netzeinheit NEy.

Signale I312x, I322x, I362x signalisieren dem Steuermodul 250 der zweiten Netzeinheit NEy die Spannung, die Frequenz und die Phasenlage der zweiten Netzebene N2 der ersten Netzeinheit NEx.

Die beiden Netzeinheiten NEx, NEy sind dazu ausgelegt, die durch die Generatoren G1, G2 erzeugten Spannungen der ersten Netzebene N1 bezüglich Amplitude und Phasenlage zu synchronisieren und die Schalteinheiten NS1xy, NS1yx zu betätigen, sobald eine Synchronisation innerhalb eines Toleranzfensters erzielt wurde.

Typischerweise nach der Verbindung der Netzeinheiten NEx, NEy auf der ersten Netzebene N1 erfolgt auf die Verbindung auf der Netzeinheiten NEx, NEy zweiten Netzebene N2 durch Schliessen der Schalteinheiten NS2xy, NS2yx, wobei vorzugsweise überwacht wird, ob die Höhe und die Phasenlage der Spannungen der Segmente der zweiten Netzebene N2 der beiden Netzeinheiten NEx, NEy übereinstimmen.

Die Netzeinheit NEx oder NEy, welche die Spannung auf der ersten und/oder zweiten Netzebene N1, N2 zuerst erstellt hat, kann den die zugehörige Schalteinheiten NS1xy, NS2xy oder NS1yx, NS2yx bereits betätigen. Die benachbarte Netzeinheit NEx oder NEy kann die Spannung am Ausgang der benachbarten und durchgeschalteten Schalteinheit NS1xy, NS2xy oder NS1yx, NS2yx somit erfassen und die Synchronisation vornehmen.

Der Netzaufbau in den Netzeinheiten NEx oder NEy erfolgt vorzugsweise wiederum gestaffelt nach einem Plan der für das verwendete verwendeten Modell oder Teilmodell MVNsxd, MVNsyd festgelegt wurde.

### Literaturverzeichnis

[1] Report into the Low Frequency Demand Disconnection (LFDD) following Generator Trips and Frequency Excursion on 9 Aug 2019, der nationalgridESO, England vom 19.08.2019
[2] A. Pandey, SUGAR-R: Robust Online Restoration Platform for SCADA-Absent Grid, Electrical and Computer Engineering Department, Carnegie Mellon University, Pittsburgh, 2019
[3] J. Bosch et al., Ultrafast restoration after nationwide blackout: concept, principles & example of application, 2020 INTERNATIONAL CONFERENCE ON SMART ENERGY SYSTEMS AND TECHNOLOGIES (SEST), IEEE, 07.09.2020
[4] US2008/074373A1

## Patentansprüche

1. Verfahren zur Steuerung eines Stromversorgungssystems (SVS),
das ein Stromversorgungsnetz (VN) umfasst, das wenigstens eine erste Netzebene (N1) mit einer höheren Spannung und wenigstens eine zweite Netzebene (N2) mit einer tieferen Spannung aufweist, das Netzelemente (G1, G2, X1, X2, L) umfasst, die durch Schaltelemente (S1, S2, S3, Y1, Y2) an die erste oder die zweite Netzebene (N1, N2) oder einerseits an die erste Netzebene (N1) und andererseits an die zweite Netzebene (N2) oder an weitere Netzebenen anschaltbar sind,
das eine zentrale Steuereinheit (1) umfasst, durch die die Schaltelemente (S1, S2, S3, Y1, Y2) steuerbar sind, und
das in mehrere Netzeinheiten (NEx, NEy) auftrennbar ist, die je ein Netzsegment (VNsx, VNsy) aufweisen, denen je ein dezentrales Steuersegment (CSx, CSy) zugeordnet wird, das eine dezentrale Steuereinheit (20) und wenigstens ein Steuermodul (2A, 2B) aufweist, und mittels dessen wenigstens ein Netzelement (G1, G2, X1, X2, L) im zugehörigen Netzsegment (VNsx, VNsy) steuerbar und/oder zuschaltbar oder abschaltbar ist, wobei
wenigstens ein Systemereignis definiert und hinsichtlich des Auftretens überwacht wird, nach dessen Detektion die dezentrale Steuereinheit (20) des dezentralen Steuersegments (CSx, CSy) automatisch die Steuerung des zugeordneten Netzsegments (VNsx, VNsy) ganz oder teilweise übernimmt und bei Auftreten eines Netzausfalls die Netzelemente (G1, G2, X1, X2, L) steuert, um die Spannungen auf den Netzebenen (N1, N2) wieder zu erstellen und die Netzeinheiten (NEx, NEy) wieder miteinander zu verbinden, **dadurch gekennzeichnet,**
**dass** von den dezentralen Steuereinheiten (20) netzabhängige und/oder netzunabhängige Elementeigenschaften und Prioritäten für die Netzelemente (G1, G2, X1, X2, L) erfasst und gespeichert werden, und dass die Netzelemente (G1, G2, X1, X2) von den dezentralen Steuereinheiten (20) in Abhängigkeit der ermittelten Elementeigenschaften und Prioritäten nach Auftreten des Netzausfalls vom Netzsegment (VNsx, VNsy) gestaffelt abgeschaltet und/oder während des Prozesses des Netzwiederaufbau dem Netzsegment (VNsx, VNsy) gestaffelt zugeschaltet werden.

2. Verfahren nach Anspruch 1, **dadurch gekennzeichnet, dass** die Netzeinheiten (NEx, NEy) bei Auftreten eines Systemereignisses, gegebenenfalls eines Netzausfalls durch Betätigung von Schalteinheiten (NS1xy, NS1yx; NS2xy, NS2yx) in mehrere Netzeinheiten (NEx, NEy) aufgetrennt werden, und nach erfolgtem dezentralem Netzwiederaufbau und der erforderlichen Synchronisation benachbarter Netzeinheiten (NEx, NEy) wieder miteinander verbunden werden.

3. Verfahren nach Anspruch 1 oder 2, **dadurch gekennzeichnet, dass** die Elementeigenschaften und/oder die Prioritäten der Netzelemente (G1, G2, X1, X2, L) des Stromversorgungsnetzes (VN) in der zentralen Steuereinheit (1) in einem Modell (MVN) abgebildet werden und dass die Elementeigenschaften und/oder die Prioritäten der Netzelemente (G1, G2, X1, X2, L) der Netzeinheiten (NEx, NEy) den Steuereinheiten (20) dieser Netzeinheiten (NEx, NEy) mit dem vollständigen Modell (MVN) oder in einem Teilmodell (MVNsxd, MVNsxd) übertragen und dort gespeichert werden und dass die Staffelung der Netzelemente (G1, G2, X1, X2, L) automatisch unter Berücksichtigung der Daten des dezentral verwendeten Modells (MVN; MVNsxd, MVNsxd) anhand dafür vorgesehener Regeln (R, R1, R2) erfolgt.

4. Verfahren nach Anspruch 3, **dadurch gekennzeichnet, dass** das übertragene Modell (MVN) oder Teilmodell (MVNsxd, MVNsxd) in den Netzeinheiten (NEx, NEy) nach Erhalt verifiziert und laufend aktualisiert wird, und dass bei einer Abweichung des neu erhaltenen Modells (MVN) oder Teilmodells (MVNsxd, MVNsxd) vom bisher bearbeiteten Modell (MVN) oder Teilmodell (MVNsxd, MVNsxd) ein Systemereignis festgestellt und die Abweichung identifiziert wird.

5. Verfahren nach einem der Ansprüche 1 - 4, **dadurch gekennzeichnet, dass** die Impedanzen und/oder die Netzimpedanzen der Netzelemente (X1, X2), insbesondere die Transformatorimpedanzen oder Netzimpedanzen der Transformatoren (X1, X2), und/oder die Standorte der Netzelemente (X1, X2) innerhalb der Topologie des Stromversorgungsnetzes (VN) ermittelt und gegebenenfalls unter Berücksichtigung der festgelegten Prioritäten gestaffelte Zuschaltzeiten für die Netzelemente (X1, X2) festgelegt und von den Steuereinheiten (20) abgespeichert und bei der gestaffelten Zuschaltung der Netzelemente (X1, X2) berücksichtigt werden, wobei Netzelemente (X1, X2) mit höheren Impedanzen und/oder Netzimpedanzen vorzugsweise früher zugeschaltet werden als Netzelemente (X1, X2) mit geringeren Impedanzen und/oder Netzimpedanzen.

6. Verfahren nach einem der Ansprüche 1 - 5, **dadurch gekennzeichnet,**
**dass** der Vorgang der Zuschaltung von Netzelementen (X1, X2), insbesondere von Transformatoren (X1, X2), in Abhängigkeit des Zustands des Stromversorgungsnetzes, wie der Netzspannung (U), der Netzfrequenz (f), auftretender harmonischer Verzerrungen oder der verfügbaren Einspeiseleistung verzögert erfolgt, oder
**dass** der Vorgang der Zuschaltung von Netzelementen (X1, X2), insbesondere von Transformatoren (X1, X2), mit einer festgelegten festen oder variablen Verzögerungszeit verzögert erfolgt.

7. Verfahren nach einem der Ansprüche 1 - 6, **dadurch gekennzeichnet,**
a) **dass** der Anteil harmonischer Verzerrungen im Stromversorgungsnetz gemessen und mit einem Grenzwert verglichen wird und dass nach Überschreiten des Grenzwerts die Zuschaltung von Netzelementen (X1, X2), insbesondere von Transformatoren (X1, X2), verzögert wird, bis die harmonischer Verzerrungen wieder unterhalb des Grenzwerts liegen; und/oder
b) **dass** der Anteil harmonischer Verzerrungen bei der Zuschaltung von Netzelementen (X1, X2), insbesondere von Transformatoren (X1, X2), durch Simulation zentral oder dezentral vorzugsweise anhand des Modells (MVN) oder Teilmodells (MVNsxd, MVNsxd) ermittelt wird und Verzögerungszeiten für die Zuschaltung der Netzelemente (X1, X2) derart festgelegt werden, dass ein vorgesehener Grenzwert bei der Simulation nicht überschritten wird.

8. Verfahren nach einem der Ansprüche 1 - 7, **dadurch gekennzeichnet, dass** die Zuschaltung von Transformatoren (X1, X2) erfolgt, indem die erste Transformatorwicklung an die erste Netzebene (N1) und die zweite Transformatorwicklung mit einer festen oder variablen Verzögerung an die zweite Netzebene (N2) zugeschaltet wird.

9. Verfahren nach einem der Ansprüche 1 - 8, **dadurch gekennzeichnet, dass** die Zuschaltung oder Abschaltung von Netzelementen (X1, X2), insbesondere Transformatoren (X1, X2), zu Zeitpunkten erfolgt, die hinsichtlich des Auftretens von Einschaltströmen und Überspannungen optimiert sind.

10. Verfahren nach einem der Ansprüche 1 - 9, **dadurch gekennzeichnet, dass** die Zuschaltung der Netzelemente (X1, X2), insbesondere der Transformatoren (X1, X2), nach einem Zeitplan oder innerhalb zeitlicher Intervalle mit individuell vorgegebenen Zuschaltzeitpunkten innerhalb dieser Intervalle erfolgt.

11. Verfahren nach einem der Ansprüche 1 - 10, **dadurch gekennzeichnet, dass** die Netzelemente (G1, G2) in der Ausgestaltung von Generatoren (G1, G2) nach Ermittlung eines Systemereignisses von der dezentralen Steuereinheit (20) der ersten Netzebene (N1) des zugehörigen Netzsegments (VNsx, VNsy) zugeschaltet werden, falls zumindest ein Teil der Netzzustandsdaten (U, I, f, Φ) innerhalb eines festgelegten Sollbereichs liegt.

12. Verfahren nach einem der Ansprüche 1 - 11, **dadurch gekennzeichnet, dass** wenigstens eine der dezentralen Steuereinheiten (20) über einen Kommunikationskanal (LC) mit Laststeuereinheiten (30) verbunden ist, und Netzelemente (L) in der Ausgestaltung von Lasten (L) in Abhängigkeit von Netzzustandsdaten (U, I, f, Φ) und/oder festgelegten Prioritäten nach Ermittlung eines Systemereignisses vom zugehörigen Netzsegment (VNsx, VNsy) abschaltet oder diesem zugeschaltet werden.

13. Verfahren nach einem der Ansprüche 1 - 12, **dadurch gekennzeichnet, dass** für wenigstens eines der dezentralen Steuersegmente (CSx, CSy)
a) die Kommunikationsverbindung zwischen der zentralen Steuereinheit (1) und der dezentralen Steuereinheit (20) überwacht und ein Ausfall dieser Kommunikationsverbindung als erstes Systemereignis festgestellt wird, und/oder
b) das Auftreten eines von der zentralen Steuereinheit (1) abgegeben Freigabebefehls und gegebenenfalls zugehöriger Parameter überwacht und das Auftreten des Freigabebefehls als zweites Systemereignis festgestellt wird, und/oder
c) die Integrität der von der zentralen Steuereinheit (1) übertragenen Daten durch Vergleich mit lokal ermittelten oder gespeicherten Daten geprüft wird, und fehlende Integrität als drittes Systemereignis festgestellt wird; und/oder
d) die Netzspannung (U) und/oder die Netzfrequenz (f) des zugeordneten Netzsegments (VNsx, VNsy) vom dezentralen Steuersegment (CSx, CSy) überwacht werden und eine Abweichung von einem vorgesehenen Spannungsbereich oder Frequenzbereich als viertes Systemereignis festgestellt wird.

14. Verfahren nach einem der Ansprüche 1 - 13, **dadurch gekennzeichnet, dass** in wenigstens einem der dezentralen Steuersegmente (CSx, CSy) ein Überwachungsmodul vorgesehen ist, welches die Verbindung zwischen der zentralen Steuereinheit (1) und der dezentralen Steuereinheit (20) durch Vergleich von Daten oder Signalen prüft, die vom dezentralen Steuersegment (CSx, CSy) zur zentralen Steuereinheit (1) übertragen und von der zentralen Steuereinheit (1) zurück zum dezentralen Steuersegment (CSx, CSy) gespiegelt werden, um im Falle einer Abweichung ein erstes Systemereignis festzustellen.

15. Verfahren nach Anspruch 13 oder 14, **dadurch gekennzeichnet, dass** der Freigabebefehl, der von der zentralen Steuereinheit (1), gegebenenfalls beim Auftreten einer Überlastung, einer Fehlfunktion oder eines Cyberangriffs, an wenigstens eines der dezentralen Steuersegmente (CSx, CSy) abgegeben wird, für eine zuvor festgelegte Zeitdauer oder eine mit dem Freigabebefehl übertragene Zeitdauer oder bis auf Widerruf durch die zentrale Steuereinheit (1) gültig ist.

16. Verfahren nach einem der Ansprüche 1 - 15, **dadurch gekennzeichnet,**
**dass** in wenigstens einem der dezentralen Steuersegmente (CSx, CSy, CSg) aktuelle oder historische oder aktuelle und historische Netzzustandsdaten (U, I, f, Φ) des zugeordneten Netzsegments (VNsx, VNsy) und aktuelle oder historische oder aktuelle und historische Zustandsdaten von Netzelementen (G1, G2, X1, X2, L) und Schaltelementen (S1, S2, S3) des zugeordneten Netzsegments (VNsx, VNsy) ermittelt oder aus dem Modell (MVN) oder Teilmodell (MVNsxd, MVNsxd) ausgelesen und als Eingangsgrössen des Steuerungsprozesses verwendet werden;
**dass** die ermittelten Netzzustandsdaten (U, I, f, Φ) mit Sollbereichen verglichen werden; und
**dass** einzelne oder alle Netzelemente (G1, G2, X1, X2, L) von der dezentralen Steuereinheit (20) vom zugehörigen Netzsegment (VNsx, VNsy) abgeschaltet werden, falls die Netzzustandsdaten (U, I, f, Φ) ausserhalb festgelegter Sollbereiche liegen, oder
**dass** einzelne oder alle Netzelemente (G1, G2, X1, X2, L) von der dezentralen Steuereinheit (20) dem zugehörigen Netzsegment (VNsx, VNsy) zugeschaltet werden, falls die Netzzustandsdaten (U, I, f, Φ) innerhalb der festgelegten Sollbereiche liegen und vorzugsweise festgestellt wurde, dass die Netzelemente (G1, G2, X1, X2, L) vor dem Systemereignis zugeschaltet waren und/oder von der zentralen Steuereinheit (1) kein Abschaltbefehl vor dem aufgetretenen Systemereignis abgegeben wurde.

17. Stromversorgungssystem (SVS) betrieben mit einem Steuerungsverfahren nach einem der Ansprüche 1 - 16, mit einer zentralen Steuereinheit (1) zur Steuerung eines Stromversorgungsnetzes (VN), das wenigstens eine erste Netzebene (N1) mit einer höheren Spannung und eine zweite Netzebene (N2) mit einer tieferen Spannung sowie Netzelemente (G1, G2, X1, X2, X3), wie Stromquellen, Generatoren (G1, G2), Umrichter, Umformer, Akkumulatoren Transformatoren (X1, X2, X3) oder Lasten (L) oder Kondensatoren, aufweist, die durch Schaltelemente (S1, S2, S3), die von der zentralen Steuereinheit (1) an die erste Netzebene (N1) oder einerseits an die erste Netzebene (N1) und andererseits an die zweite Netzebene (N2) anschliessbar sind, wobei das Stromversorgungsnetz (VN) in mehrere Netzsegmente (VNsx, VNsy) aufgeteilt ist, denen je ein dezentrales Steuersegment (CSx, CSy) zugeordnet ist, das eine dezentralen Steuereinheit (20) und wenigstens ein Steuermodul (2A, 2B) aufweist, mittels dessen wenigstens ein Netzelement (G1, G2, X1, X2, L) im zugehörigen Netzsegment (VNsx, VNsy) zuschaltbar oder abschaltbar ist, falls ein definiertes Systemereignis eintritt, nach dessen Detektion die dezentrale Steuereinheit (20) des dezentralen Steuersegments (CSx, CSy) automatisch die Steuerung des zugeordneten Netzsegments (VNsx, VNsy) ganz oder teilweise übernimmt.
